# EUROPÄISCHE PATENTSCHRIFT

(11) **EP 1 422 005 B1**
(45) Veröffentlichungstag und Bekanntmachung des Hinweises auf die Patenterteilung: **29.04.2009**
(21) Anmeldenummer: 03026753.8
(22) Anmeldetag: 21.11.2003
(51) Int. Cl.: B23B 5/44, B23B 29/24, B23C 5/04, B23C 5/12, B23B 1/00

(54) **Verfahren und Vorrichtung zur Randbearbeitung einer optischen Linse aus Kunststoff**
Method and device for the working of the edge of a plastic optical lens
Procédé et dispositif pour l'usinage du bord de lentilles ophtalmiques en plastique

(30) Priorität: 25.11.2002 DE 10255058
(43) Veröffentlichungstag der Anmeldung: 26.05.2004
(73) Patentinhaber: Satisloh GmbH, 35578 Wetzlar (DE)
(72) Erfinder: Diehl, Jochen, 35398 Giessen (DE); Wallendorf, Steffen, 35398 Giessen (DE)
(74) Vertreter: Oppermann, Mark

(56) Entgegenhaltungen:
- EP-A- 0 705 660
- EP-A- 1 166 929
- EP-A- 1 238 733
- DE-A- 10 143 848
- DE-A- 19 525 310
- DE-C- 291 465
- DE-U- 20 109 197
- US-A- 5 615 588

## Beschreibung

Die vorliegende Erfindung bezieht sich auf ein Verfahren und eine Vorrichtung zur Randbearbeitung einer optischen Linse aus Kunststoff gemäß den Oberbegriffen der Patentansprüche 1 bzw. 19. Insbesondere bezieht sich die Erfindung auf die industrielle, d.h. im Hinblick auf die Genauigkeit und Bearbeitungsgeschwindigkeit optimierte Bearbeitung der Ränder von Brillenlinsen aus Kunststoffen, wie Polycarbonat, CR39 und sogenannte "HI-Index" Materialien.

Wenn nachfolgend von Brillenlinsen die Rede ist, sind darunter optische Linsen bzw. Linsenrohlinge für Brillen aus insbesondere den obigen gebräuchlichen Kunststoffmaterialien und mit beliebiger Form des Umfangsrandes der Linse bzw. des Linsenrohlings zu verstehen, die vor der Bearbeitung ihres Randes bereits an einer oder beiden optisch wirksamen Fläche(n) bearbeitet sein können aber nicht müssen.

Ziel der Brillenlinsenrandbearbeitung ist es, den Rand einer Brillenlinse so fertig zu bearbeiten, daß die Brillenlinse in ein Brillengestell bzw. eine Brillenfassung eingesetzt werden kann. Hierzu bedient man sich im Stand der Technik in der Regel eines Verfahrens (siehe z.B. die DE 101 19 662 A1 der Anmelderin), welches grob in zwei Schritte bzw. Verfahrensstufen, nämlich einen Vorbearbeitungsschritt und einen Fertigbearbeitungsschritt unterteilt werden kann, sowie einer hierfür geeigneten Randbearbeitungsvorrichtung (siehe z.B. die DE 101 14 239 A1 der Anmelderin), auch "Edger" genannt.

Beim Vorbearbeiten des Randes der Linse erhält die Linse mittels eines relativ zur Werkstückdrehachse wenigstens radial zustellbaren und um eine Werkzeugdrehachse drehbaren Randbearbeitungswerkzeugs in der Draufsicht gesehen eine Umfangskontur, die ggf. bis auf ein geringfügiges Übermaß der Umfangskontur der Fassung für die Linse entspricht. Beim Fertigbearbeiten des Randes der Linse, welches mit einem weiteren Randbearbeitungswerkzeug erfolgt, erhält die Linse am Rand in erster Linie entsprechend ihrer an der Fassung vorgesehenen Befestigung im Querschnitt gesehen eine vorbestimmte Randgeometrie. Den jeweiligen Erfordernissen entsprechend wird beim Fertigbearbeiten die Linse am Rand auch mit einer Schutzfase am Übergang zu einer oder beiden optisch wirksamen Flächen versehen und ggf. poliert.

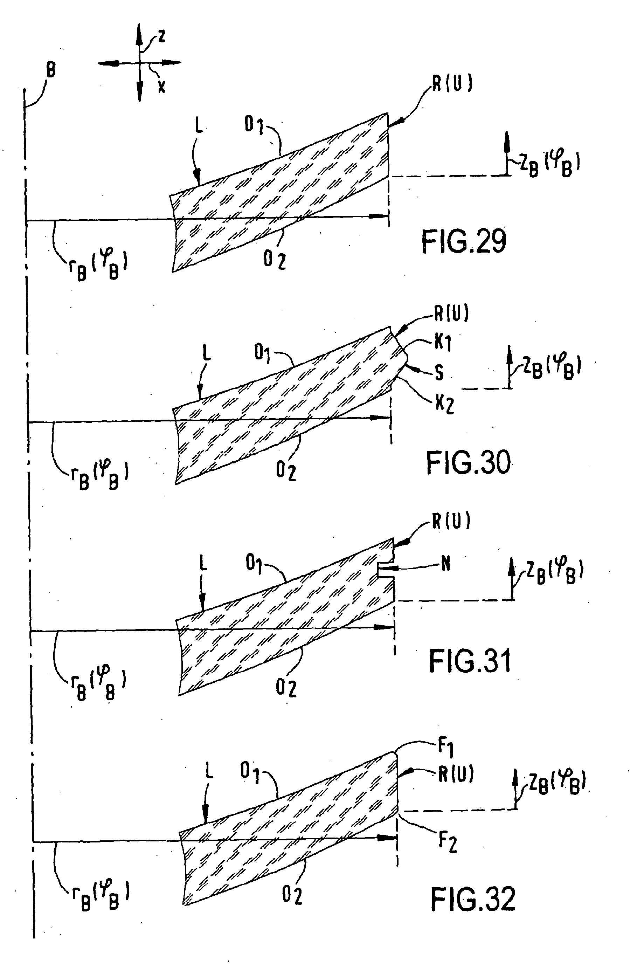

Die Fig. 29 bis 32 zeigen heutzutage übliche Randgrundgeometrien an fertiggerandeten Brillenlinsen. In den Fig. 29 bis 32 ist die Linse L, die bei der Randbearbeitung um die Werkstückdrehachse B im Drehwinkel ϕ_{B} geregelt gedreht wird, nur in einer abgebrochenen Schnittansicht im Bereich ihres sich an die optisch wirksamen Flächen O₁, O₂ anschließenden Randes R gezeigt. In einer Draufsicht von oben in den Fig. 29 bis 32 gesehen bildet der Rand R die Umfangskontur U der Linse L aus, die von der Kreisform abweichen kann. Nur in dem Sonderfall der Kreisform hat die Linse L an jedem Punkt ihrer Umfangskontur U einen konstanten Abstand bzw. Radius r_{B} zur Werkstückdrehachse B. Weicht die Umfangskontur U von der Kreisform ab, so ändert sich der Radius r_{B}(ϕ_{B}) in Abhängigkeit vom Drehwinkel ϕ_{B}, mit dem die Linse L um die Werkstückdrehachse B gedreht wird.

Bei der Linse L gemäß Fig. 29 wird der Rand R im Querschnitt gesehen durch eine Gerade gebildet, die parallel zur Werkstückdrehachse B verläuft. Diese Randgrundgeometrie kann die Linse L nach dem Vorbearbeiten des Randes R und auch nach dem Fertigbearbeiten des Randes R aufweisen. In letzterem Fall erfolgt die Befestigung der Linse L am Brillengestell häufig mittels Befestigungsschrauben (nicht dargestellt), die Bohrungen (nicht gezeigt) durchgreifen, welche ausgehend von einer der optisch wirksamen Flächen O₁, O₂ in die Linse L eingebracht sind.

Bei der Linse L gemäß Fig. 30 ist auf dem ansonsten geraden und parallel zur Werkstückdrehachse B verlaufenden Rand R umlaufend eine sogenannte Spitzfacette S ausgebildet, die im Querschnitt gesehen eine dreieckige Form oder anders ausgedrückt zwei Flanken K₁, K₂ aufweist, welche einen vorbestimmten Flankenwinkel miteinander einschließen. Eine derartige Randgrundgeometrie, die die Linse L ggf. schon nach dem Vorbearbeiten, jedenfalls aber nach dem Fertigbearbeiten des Randes R aufweisen kann, ermöglicht eine formschlüssige Befestigung der Linse L am Brillengestell. Die Fassungen des Brillengestells haben hierbei innenumfangsseitig eine Nut, die der Aufnahme der Spitzfacette S dient. In Abhängigkeit von der Fassungsgeometrie kann die Spitzfacette S unterschiedliche Flankenwinkel haben.

Die Fig. 31 zeigt eine Linse L, in deren ansonsten geraden und parallel zur Werkstückdrehachse B verlaufenden Rand R umlaufend eine Rille oder Nut N von vorbestimmter Breite und Tiefe eingebracht ist. Bei dieser Randgrundgeometrie, die die Linse L nach dem Fertigbearbeiten des Randes R aufweisen kann, dient die Nut N der Aufnahme einer an der Fassung des Brillengestells innenumfangsseitig vorgesehenen Facette oder eines Fadens, mittels dessen die Linse L am Brillengestell befestigt wird. Abweichend von dem dargestellten rechteckigen Nutquerschnitt kann die Nut N auch einen gerundeten Nutgrund aufweisen. Des weiteren kann die Nut N in Abhängigkeit von der Fassungsgeometrie bzw. dem Durchmesser des Fadens unterschiedliche Nutbreiten bzw. -tiefen haben.

Die Linse L gemäß Fig. 32 ist am ansonsten geraden und parallel zur Werkstückdrehachse B verlaufenden Rand R mit Schutzfasen F₁, F₂ am Übergang zu beiden optisch wirksamen Flächen O₁, O₂ versehen. Den jeweiligen Erfordernissen entsprechend kann auch nur eine Schutzfase vorgesehen sein. Bei den Schutzfasen F₁, F₂ handelt es sich um Fasen mit einem Winkel von in der Regel 45° (Konkavseite) bzw. 60° (Konvexseite), die, wie der Name schon impliziert, verhindern sollen, daß sich der Optiker beim Einsetzen der Linse L in das Brillengestell bzw. der Brillenträger an scharfkantigen Kanten der Linse L verletzt. Derartige Schutzfasen F₁, F₂, die beim Fertigbearbeiten des Randes R der Linse L ausgebildet werden ("Kantenbrechen"), können auch bei den Randgrundgeometrien mit Spitzfacette S bzw. mit Nut N vorgesehen sein.

Zusätzlich zur Ausbildung dieser Randgrundgeometrien kann es den jeweiligen Erfordernissen entsprechend, namentlich dann, wenn der Rand R der am Brillengestell gefaßten Linse L noch sichtbar ist, erforderlich sein, den Rand R als weiteren Schritt der Fertigbearbeitung wenigstens teilweise zu polieren, so daß dieser an den sichtbaren Stellen keine matte, sondern eine glänzende Oberfläche aufweist.

Erwähnt sei in diesem Zusammenhang schließlich noch, daß sich insbesondere bei Linsen L, deren Umfangskontur U von der Kreisform abweicht bzw. nach der Randbearbeitung der ggf. dickenoptimierten Linse L abweichen soll, bei der Randbearbeitung der Linse L die Höhenwerte z_{B}(ϕ_{B}) des Randes R und auch die Dicke des Randes R an der Eingriffsstelle zum Randbearbeitungswerkzeug in Abhängigkeit vom Drehwinkel ϕ_{B}, mit dem die Linse L um die Werkstückdrehachse B gedreht wird, ändern. Um vor diesem Hintergrund zu verhindern, daß bei der Randbearbeitung der Linse L die Spitzfacette S bzw. die Nut N mit über den Umfang betrachtet sich ändernden Abständen zu den optisch wirksamen Flächen O₁, O₂ auf dem bzw. im Rand R ausgebildet wird, was zu einem unschönen Vorspringen der gefaßten Linse L vom Brillengestell führen kann, und um zu verhindern, daß sich die Größe der z.T. sichtbaren Schutzfasen F₁, F₂ über den Umfang gesehen in unschöner Weise ändert, ist es üblich geworden, das Randbearbeitungswerkzeug während der Randbearbeitung nicht nur radial bezüglich der Werkstückdrehachse B zuzustellen (X-Achse), sondern ebenfalls in Abhängigkeit vom Drehwinkel ϕ_{B} der Linse L auch parallel zur Werkstückdrehachse B nachzustellen (Z-Achse), so daß die Randgeometrie an vorbestimmter Höhe erzeugt wird.

Aus den obigen Ausführungen ist ersichtlich, daß es eine Vielfalt von möglichen Randgeometrien gibt, die es möglichst effizient am Rand der Linse auszubilden gilt. Neben zusätzlichen Randbearbeitungswerkzeugen, die in vorrichtungstechnisch eher aufwendiger Weise an zusätzlichen Spindeln bekannter Randbearbeitungsvorrichtungen eingesetzt wurden (siehe z.B. DE 43 08 800 A1, EP 0 820 837 B1, DE 198 34 748 A1), sind in diesem Zusammenhang auch bereits drehend antreibbare Kombinationswerkzeuge vorgeschlagen worden (siehe z.B. DE 87 11 265 U1, EP 0 705 660 B1), mittels der sowohl Vor- als auch Fertigbearbeitungsschritte ausgeführt werden können.

So offenbart die gattungsbildende EP 0 705 660 B1 ein Kombinationswerkzeug für die Brillenlinsenrandbearbeitung, mit einem fliegend lagerbaren Grundkörper, an dessen Umfang zwei Fräserschneiden diametral gegenüberliegend befestigt sind, die sich in axialer Richtung, d.h. parallel zur Werkzeugdrehachse C erstrecken. Mittels der Fräserschneiden kann die zu bearbeitende Linse am Rand so vorbearbeitet werden, daß die Linse in der Draufsicht gesehen eine Umfangskontur erhält, die ggf. bis auf ein geringfügiges Übermaß der Umfangskontur einer Fassung für die Linse entspricht. Auch ist es möglich, mittels an den Fräserschneiden vorgesehenen V-förmigen Kerben in einem Vorbearbeitungsschritt eine Spitzfacette am Rand der Linse anzulegen. Bei diesem Kombinationswerkzeugs ist des weiteren an die axiale Stirnfläche des Grundkörpers ein Feinschleifwerkzeug zum Fertigbearbeiten des Randes der Linse angeflanscht, das in seiner zylinderförmigen Schleiffläche eine umlaufende, im Querschnitt V-förmige Nut zum Fertigbearbeiten der Spitzfacette aufweist. Am vom Grundkörper abgewandten Ende des Feinschleifwerkzeugs ist schließlich ein konischer Schleifabschnitt vorgesehen, mittels dessen am Rand der Linse eine Schutzfase am Übergang zu nur einer der beiden optisch wirksamen Flächen angelegt werden kann.

EP 0 0705 660 B1 offenbart ebenfalls ein Verfahren zur Randbearbeitung einer Linse gemäß dem Oberbegriff des Anspruchs 1.

Auch offenbart die EP 0 705 660 B1 eine Vorrichtung zur Randbearbeitung von Brillenlinsen gemäß dem Oberbegriff des Anspruchs 19, mit zwei fluchtenden, um eine Werkstückdrehachse im Drehwinkel geregelt drehbaren Haltewellen, zwischen denen die Linse einspannbar ist. Diese Vorrichtung hat ferner eine Werkzeugspindel, mittels der das Kombinationswerkzeug um eine Werkzeugdrehachse drehend angetrieben werden kann, wobei die Werkzeugdrehachse im wesentlichen parallel zur Werkstückdrehachse verläuft. Bei diesem Stand der Technik sind die Haltewellen und die Werkzeugspindel lagegeregelt in einer ersten Achsrichtung X aufeinander zu und in einer rechtwinklig zur ersten Achsrichtung X verlaufenden zweiten Achsrichtung Z parallel zueinander bewegbar, wofür die Werkzeugspindel auf einem Z-Schlitten angeordnet ist, während die Haltewellen auf einem X-Schlitten angeordnet sind.

Wie ein Vergleich mit den oben näher beschriebenen möglichen Randgeometrien zeigt, kann mit dem Kombinationswerkzeug gemäß der EP 0 705 660 B1 nur ein kleiner Teil der möglichen Randgeometrien erzeugt werden. Darüber hinaus baut dieses Kombinationswerkzeug verhältnismäßig lang, was insbesondere bei der fliegenden Lagerung des Kombinationswerkzeugs eine gewisse Schwingungsneigung zur Folge hat, die der Bearbeitungsqualität abträglich sein kann. Hinzu kommt, daß sich das Feinschleifwerkzeug des Kombinationswerkzeugs insbesondere beim Fertigbearbeiten der Spitzfacette in Umfangsrichtung gesehen stets über einen im Verhältnis breiten Bereich mit dem Rand der Linse in Bearbeitungseingriff befindet. Erfolgt hierbei nun mittels des Z-Schlittens eine axiale Bewegung des Kombinationswerkzeugs parallel zu den Linsenhaltewellen, um, wie oben beschrieben, die Spitzfacette an in Z-Richtung verschiedenen Positionen auf dem Rand der Linse zu bearbeiten, so führt dies in Abhängigkeit von der Größe der Z-Richtungsschwankungen des Randes zu einem mehr oder weniger starken "Verschmieren" bzw. "Verschleifen" der Spitzfacette, so daß diese eine nicht exakt vorgebbare Geometrie erhält.

Ausgehend vom Stand der Technik nach der EP 0 705 660 B1 liegt der Erfindung die Aufgabe zugrunde, ein effizientes Verfahren anzugeben und eine einfach aufgebaute Vorrichtung zu schaffen, die eine möglichst hohe Flexibilität im Hinblick auf mögliche Randgeometrien versprechen, welche industriell einsetzbar sind und mittels dessen bzw. der die Nachteile des Stands der Technik vermieden werden können.

Diese Aufgabe wird durch die in den Patentansprüchen 1, 19 bzw. 20 angegebenen Merkmale gelöst. Vorteilhafte bzw. zweckmäßige Weiterbildungen der Erfindung sind Gegenstand der Patentansprüche 2 bis 18.

Nach einem Grundgedanken der Erfindung erfolgt bei einem Verfahren zur Randbearbeitung einer optischen Linse L, namentlich einer Brillenlinse aus Kunststoff, die im Drehwinkel ϕ_{B} geregelt um eine Werkstückdrehachse B drehbar ist,
bei dem der Rand R der Linse L mittels eines relativ zur Werkstückdrehachse B wenigstens radial zustellbaren und um eine Werkzeugdrehachse C drehbaren Kombinationswerkzeugs zunächst vorbearbeitet wird, wobei die Linse L in der Draufsicht gesehen eine Umfangskontur U erhält, die ggf. bis auf ein geringfügiges Übermaß der Umfangskontur einer Fassung für die Linse L entspricht, und
bei dem der Rand R der Linse L mittels des Kombinationswerkzeugs sodann fertigbearbeitet wird, wobei die Linse L am Rand R entsprechend ihrer an der Fassung vorgesehenen Befestigung im Querschnitt gesehen eine vorbestimmte Randgeometrie erhält, ggf. mit einer Schutzfase F₁, F₂ am Übergang zu einer oder beiden optisch wirksamen Flächen O₁, O₂ versehen wird und ggf. poliert wird,
das Vorbearbeiten des Randes R und das Fertigbearbeiten des Randes R mittels eines sowohl Fräserschneiden als auch mindestens einen Drehmeißel aufweisenden Kombinationswerkzeugs, das während einer Fräsbearbeitung des Randes R in der Drehzahl n_{C} geregelt um die Werkzeugdrehachse C gedreht wird und das vor und ggf. auch während einer Drehbearbeitung des Randes R im Drehwinkel ϕ_{C} geregelt um die Werkzeugdrehachse C verschwenkt wird.

In einer vorteilhaften Weiterbildung der Erfindung wird ein Kombinationswerkzeug verwendet, das einen Grundkörper aufweist, an dem eine Mehrzahl von Fräserschneiden vorgesehen ist, die bei einer Drehung des Kombinationswerkzeugs um eine Werkzeugdrehachse C einen Flugkreis definieren und mittels der die Linse L am Rand R insbesondere so vorbearbeitbar ist, daß die Linse L in der Draufsicht gesehen eine Umfangskontur U erhält, die ggf. bis auf ein geringfügiges Übermaß der Umfangskontur einer Fassung für die Linse L entspricht, wobei am Grundkörper auch mindestens ein Drehmeißel vorgesehen ist, der in Richtung der Werkzeugdrehachse C bezüglich der Fräserschneiden axial versetzt angeordnet ist oder auf axialer Höhe der Fräserschneiden mit einer gegenüber dem Flugkreis der Fräserschneiden radial nach innen versetzten Drehschneide in Umfangsrichtung des Kombinationswerkzeugs zwischen den Fräserschneiden angeordnet ist, und wobei der Drehmeißel eine Schneidengeometrie aufweist, mittels der die Linse L am Rand R insbesondere so fertigbearbeitbar ist, daß die Linse L am Rand R entsprechend ihrer an der Fassung vorgesehenen Befestigung im Querschnitt gesehen eine vorbestimmte Randgeometrie aufweist und/oder mit einer Schutzfase F₁, F₂ am Übergang zu einer oder beiden optisch wirksamen Flächen O₁, O₂ versehen und/oder poliert ist.

Ferner ist erfindungsgemäß bei einer insbesondere für die Durchführung des obigen Verfahrens unter Verwendung eines Kombinationswerkzeugs geeigneten Vorrichtung zur Randbearbeitung einer optischen Linse L, namentlich einer Brillenlinse aus Kunststoff, welche zwei fluchtende, um eine Werkstückdrehachse B im Drehwinkel ϕ_{B} geregelt drehbare Haltewellen aufweist, zwischen denen die Linse L einspannbar ist, und die eine Werkzeugspindel hat, mittels der das Kombinationswerkzeug um eine Werkzeugdrehachse C drehend antreibbar ist, die zu der Werkstückdrehachse B im wesentlichen parallel verläuft, wobei die Haltewellen und die Werkzeugspindel lagegeregelt in einer ersten Achsrichtung X aufeinander zu und ggf. in einer rechtwinklig zur ersten Achsrichtung X verlaufenden zweiten Achsrichtung Z parallel zueinander bewegbar sind, für eine Drehbearbeitung des zu bearbeitenden Randes R der Linse L das Kombinationswerkzeug mittels der Werkzeugspindel im Drehwinkel ϕ_{C} geregelt um die Werkzeugdrehachse C verschwenkbar, so daß ein am Kombinationswerkzeug vorgesehener Drehmeißel mit dem zu bearbeitenden Rand R in einen definierten Drehbearbeitungseingriff bringbar ist.

Im Kern stellt die Erfindung verfahrensseitig also darauf ab, bei der Randbearbeitung einer optischen Linse aus Kunststoff, insbesondere einer Brillenlinse, ein Kombinationswerkzeug einzusetzen bzw. zu verwenden, mittels dessen sowohl ein Fräsbearbeitungsvorgang als auch ein Drehbearbeitungsvorgang am Rand R der Linse L möglich ist. Somit können mit einem Fräsbearbeitungsvorgang, bei dem das Kombinationswerkzeug in der Drehzahl n_{C} geregelt um die Werkzeugdrehachse C gedreht wird, im Verhältnis große Materialmengen der Linse L in sehr kurzer Zeit zerspant werden, etwa um der Linse L in einem Vorbearbeitungsschritt in der Draufsicht gesehen eine Umfangskontur U zu geben, die ggf. bis auf ein geringfügiges Übermaß der Umfangskontur einer Fassung der Linse L entspricht. Der ebenfalls ermöglichte Drehbearbeitungsvorgang, vor dem bzw. bei dem das Kombinationswerkzeug im Drehwinkel ϕ_{C} geregelt um die Werkzeugdrehachse C verschwenkt wird, kann sodann der Fertigbearbeitung des Randes R der Linse L dienen, um in Abhängigkeit von der Schneidengeometrie des Drehmeißels der Linse L am Rand R entsprechend ihrer an der Fassung vorgesehenen Befestigung im Querschnitt gesehen eine vorbestimmte Randgeometrie zu geben und/oder am Rand R der Linse L am Übergang zu einer oder beiden optisch wirksamen Flächen O₁, O₂ eine Schutzfase anzulegen und/oder die Linse L am Rand R zu polieren. Ein wesentlicher Vorteil der erfindungsgemäß ermöglichten Drehbearbeitung des Randes R, bei welcher der Drehmeißel in einer definierten Drehwinkelstellung steht oder lediglich im Drehwinkel ϕ_{C} geregelt nachgeführt bzw. verschwenkt wird, gegenüber der (Fein)Schleifbearbeitung im Stand der Technik, bei der das Schleifwerkzeug um die Werkzeugdrehachse rotiert, wird darin gesehen, daß bei der Drehbearbeitung des Randes R in Abhängigkeit von der Schneidengeometrie des Drehmeißels sich dieser in Umfangsrichtung gesehen in einem im wesentlichen punktförmigen Bearbeitungseingriff mit dem Rand R der Linse L befinden kann. Wenn bei einem solchen punktförmigen Bearbeitungseingriff mit einem eine entsprechende Schneidengeometrie aufweisenden Drehmeißel etwa eine Spitzfacette S am Rand R der Linse L angelegt wird und hierbei eine axiale Relativbewegung des Kombinationswerkzeugs bezüglich der Linse L parallel zu der Werkstückdrehachse B erfolgt, um, wie eingangs beschrieben, die Spitzfacette S an verschiedenen Höhenpositionen auf dem Rand R der Linse L zu bearbeiten, besteht nicht mehr die Gefahr des "Verschmierens" der Spitzfacette S, die somit eine durch die Schneidengeometrie des Drehmeißels exakt vorgebbare Geometrie erhält.

Verwendet wird hierzu bevorzugt ein Kombinationswerkzeug, das quasi eine Kombination von Fräser und Drehmeißelrevolver darstellt. Mit einem Drehmeißel lassen sich verglichen zu einem Schleifwerkzeug deutlich mehr und andere Schneidengeometrien realisieren, so daß Randgeometrien an der Linse L, etwa die eingangs beschriebene Rille oder Nut N, mit einem Drehmeißel, der eine entsprechende Drehschneide aufweist, noch ausgebildet werden können, während mit dem Schleifwerkzeug des Kombinationswerkzeugs gemäß Stand der Technik solche Randgeometrien nicht mehr erzeugbar sind, im Stand der Technik vielmehr in aufwendiger Weise mit zusätzlichen Werkzeugen und zugeordneter Peripherie (Spindel, Antrieb, Zustellmechanismen, etc.) gearbeitet werden muß.

Bei einer Ausführungsform ist der wenigstens eine Drehmeißel bezüglich der Fräserschneiden axial versetzt angeordnet, so daß der Drehmeißel auch über den Flugkreis der Fräserschneiden vorstehen kann, ohne bei der Fräsbearbeitung des Randes R der Linse L mit dem Rand R zu kollidieren. Dies schafft auf einfache Weise einen zusätzlichen Gestaltungsspielraum bei der Gestaltung des Drehmeißels bzw. der Schneidengeometrie des Drehmeißels und ist wiederum im Hinblick auf die Flexibilität des Werkzeugkonzepts bezüglich der Vielfalt möglicher Randgeometrien als vorteilhaft zu bewerten. Verglichen zu den bekannten Kombinationswerkzeugen kann das vorgeschlagene Kombinationswerkzeug dennoch axial sehr kurz bauen, da der Drehmeißel, selbst wenn seine Drehschneide eine Breite aufweist, die größer ist als die maximale Randdicke der damit zu bearbeitenden Linse L bzw. bearbeiteten Linse L, immer noch deutlich schmaler gehalten werden kann als die Schleifwerkzeuge der bekannten Kombinationswerkzeuge. Eine solche in axialer Richtung sehr kompakte Bauweise des Kombinationswerkzeugs ist einer guten Bearbeitungsqualität, genauer hohen am Rand R der Linse L erzielbaren Oberflächengüten insofern förderlich, als das Kombinationswerkzeug dann nur eine sehr geringe Schwingungsneigung aufweist, wenn überhaupt. Hinzu kommt hier, daß ein kurzes Kombinationswerkzeug auch der Lagerung der Werkzeugspindel nahe angeordnet werden kann, einhergehend mit der Möglichkeit, die Haltewellen für die Linse L kurz auszubilden, was insgesamt zu einer sehr steifen Konstruktion des Edgers beiträgt, mit dem infolgedessen Linsen L bei besserer Bearbeitungsqualität schneller bearbeitet werden können.

Bei einer alternativen Ausführungsform sitzt der Drehmeißel mit einer gegenüber dem Flugkreis der Fräserschneiden radial nach innen versetzten Drehschneide sogar auf axialer Höhe der Fräserschneiden in Umfangsrichtung des Kombinationswerkzeugs zwischen den Fräserschneiden, so daß die Drehschneide bei einer kontinuierlichen Drehung des Kombinationswerkzeugs während eines Fräsbearbeitungsvorgangs nicht mit dem Rand R der Linse L in Bearbeitungseingriff gelangen kann. Ein Vorteil dieser Ausführungsform ist darin zu sehen, daß das Kombinationswerkzeug ohne Einbußen bei den Bearbeitungsmöglichkeiten zur Erzielung einer hervorragenden Bearbeitungsqualität noch kürzer bauen kann.

Zum Kombinationswerkzeug ist noch zu erwähnen, daß das Kombinationswerkzeug für einen sich an einen Fräsbearbeitungsvorgang anschließenden Drehbearbeitungsvorgang zunächst zu stoppen und sodann mit seinem Drehmeißel bezüglich des zu bearbeitenden Randes R der Linse L winkelzupositionieren ist. Der Drehmeißel kann somit gänzlich unabhängig von den Fräserschneiden hinsichtlich der Schneidengeometrie (insbesondere Geometrie der Schneidkante sowie Spanwinkel und Freiwinkel) sowie dem Schneidenmaterial gestaltet und demgemäß optimal an das Material der Linse L angepaßt werden.

Vorrichtungsseitig wird ferner die etwa aus der DE 101 14 239 A1 der Anmelderin bekannte, in den zwei Linearachsen X und Z lagegeregelte sowie in der Werkstückdrehachse B drehwinkelgeregelte Vorrichtung in einfacher Weise um eine weitere (CNC-) geregelte Achse ergänzt, nämlich die drehwinkelgeregelte Werkzeugdrehachse C. Dies gestattet eine Schwenkpositionierung des Kombinationswerkzeugs bezüglich des zu bearbeitenden Randes R der Linse L, so daß der Drehmeißel des Kombinationswerkzeugs stets in einen definierten Drehbearbeitungseingriff mit dem zu bearbeitenden Rand R der Linse L gebracht werden kann.

In Summe kann der zu bearbeitende Rand R der Linse L mit nur einem Kombinationswerkzeug, welches neben Fräserschneiden auch wenigstens einen Drehmeißel aufweist, in nur einer Vorrichtung und einer Aufspannung der Linse L sowohl einem Fräsbearbeitungsvorgang mit einem verhältnismäßig großen Zerspanungsvolumen als auch einem (Fein)Drehbearbeitungsvorgang unterworfen werden, so daß eine Vielzahl von Randgeometrien [weitgehende Gestaltungsmöglichkeiten bei der Schneidkantengeometrie des Drehmeißels] mit hoher Qualität, d.h. makrogeometrisch gesehen verbesserter Geometriegenauigkeit [in Umfangsrichtung betrachtet im wesentlichen punktförmiger Drehbearbeitungseingriff ist möglich] und mikrogeometrisch gesehen hoher Oberflächengüte [schwingungsvermeidende bzw. -reduzierende Kurzbauweise des Kombinationswerkzeugs ist möglich; weitgehende Gestaltungsfreiheit bei der Schneidengeometrie des Drehmeißels hinsichtlich insbesondere des Span- und Freiwinkels] schnell und zuverlässig bearbeitet werden kann.

Im folgenden wird die Erfindung anhand bevorzugter Ausführungsbeispiele unter Bezugnahme auf die beigefügten, zum Teil schematischen Zeichnungen näher erläutert. Darin zeigen:
- Fig. 1: eine perspektivische Ansicht eines erfindungsgemäß verwendbaren Kombinationswerkzeugs nach einem ersten Ausführungsbeispiel, welches sich mit dem Rand R einer zu bearbeitenden Linse L in einem Drehbearbeitungseingriff befindet,
- Fig. 2: eine Seitenansicht des Kombinationswerkzeugs gemäß Fig. 1, welches sich mit dem Rand R der zu bearbeitenden Linse L im Drehbearbeitungseingriff befindet,
- Fig. 3: eine der Fig. 2 entsprechende Seitenansicht zum ersten Ausführungsbeispiel, in der das Kombinationswerkzeug geschnitten und die Linse L teilweise aufgebrochen dargestellt ist,
- Fig. 4: eine Schnittansicht entsprechend der Schnittverlaufslinie IV-IV in Fig. 2 in einem gegenüber der Fig. 2 vergrößerten Maßstab,
- Fig. 5: eine vergrößerte Darstellung des Details V in Fig. 4,
- Fig. 6: eine vergrößerte Darstellung des Details VI in Fig. 4,
- Fig. 7 - 19: der Fig. 2 in der Darstellungsweise entsprechende Seitenansichten zum ersten Ausführungsbeispiel, die veranschaulichen, welche Randbearbeitungsvorgänge mit dem Kombinationswerkzeug nach dem ersten Ausführungsbeispiel durchführbar sind,
- Fig. 20(A)-(G): prinzipielle Darstellungen eines erfindungsgemäß verwendbaren Kombinationswerkzeugs in einer Draufsicht von oben, die veranschaulichen, wie ein Drehmeißel des Kombinationswerkzeugs durch überlagerte Regelung in der X-Achse [x(ϕ_{B},r_{B}(ϕ_{B}))] und der C-Achse [ϕ_{C}(ϕ_{B},r_{B}(ϕ_{B}))] in Abhängigkeit vom Drehwinkel ϕ_{B} der Linse L und deren Radius r_{B}(ϕ_{B}) während der Randbearbeitung bewegt bzw. nachgeführt wird,
- Fig. 21: eine perspektivische Ansicht eines erfindungsgemäß verwendbaren Kombinationswerkzeugs nach einem zweiten Ausführungsbeispiel, welches sich mit dem Rand R einer zu bearbeitenden Linse L in einem Drehbearbeitungseingriff befindet und gegenüber dem ersten Ausführungsbeispiel eine andere Ausgestaltung der Fräserschneiden aufweist,
- Fig. 22: eine Seitenansicht des Kombinationswerkzeugs gemäß Fig. 21, welches sich mit dem Rand R der zu bearbeitenden Linse L im Drehbearbeitungseingriff befindet,
- Fig. 23: eine perspektivische Ansicht eines erfindungsgemäß verwendbaren Kombinationswerkzeugs nach einem dritten Ausführungsbeispiel, welches sich mit dem Rand R einer zu bearbeitenden Linse L in einem Drehbearbeitungseingriff befindet und gegenüber dem ersten und zweiten Ausführungsbeispiel eine andere Ausgestaltung der Fräserschneiden aufweist,
- Fig. 24: eine Seitenansicht des Kombinationswerkzeugs gemäß Fig. 23, welches sich mit dem Rand R der zu bearbeitenden Linse L im Drehbearbeitungseingriff befindet,
- Fig. 25: eine perspektivische Ansicht eines erfindungsgemäß verwendbaren Kombinationswerkzeugs nach einem vierten Ausführungsbeispiel, welches sich mit dem Rand R einer zu bearbeitenden Linse L in einem Drehbearbeitungseingriff befindet und gegenüber dem ersten bis dritten Ausführungsbeispiel eine andere Ausgestaltung der Fräserschneiden aufweist,
- Fig. 26: eine Seitenansicht des Kombinationswerkzeugs gemäß Fig. 25, welches sich mit dem Rand R der zu bearbeitenden Linse L im Drehbearbeitungseingriff befindet,
- Fig. 27: eine Seitenansicht eines erfindungsgemäß verwendbaren Kombinationswerkzeugs nach einem fünften Ausführungsbeispiel, welches sich mit dem Rand R einer zu bearbeitenden Linse L in einem Drehbearbeitungseingriff befindet und bei dem die Drehmeißel im Gegensatz zum ersten bis vierten Ausführungsbeispiel auf axialer Höhe der Fräserschneiden mit gegenüber dem Flugkreis der Fräserschneiden radial nach innen versetzten Drehschneiden in Umfangsrichtung des Kombinationswerkzeugs zwischen den Fräserschneiden angeordnet sind,
- Fig. 28: eine Schnittansicht entsprechend der Schnittverlaufslinie XXVIII-XXVIII in Fig. 27 in einem gegenüber der Fig. 27 vergrößerten Maßstab und
- Fig. 29 - 32: abgebrochene Schnittansichten von Brillenlinsen L im Bereich des Randes R zur Veranschaulichung heutzutage üblicher Randgrundgeometrien an fertiggerandeten Brillenlinsen.

Zu den Figuren sei an dieser Stelle vorab noch angemerkt, daß die darin gezeigten Brillenlinsen L zur Vereinfachung der Darstellung lediglich sehr einfache Geometrien aufweisen, nämlich rein sphärische optisch wirksame Flächen O₁, O₂ und kreisrunde bzw. rechteckige Umfangskonturen U. Selbstverständlich ist die Erfindung nicht auf diese Geometrien beschränkt. Vielmehr können die Linsen L eine beliebige Umfangskontur U haben und auch von einer sphärischen Form abweichende optisch wirksame Flächen O₁, O₂, etwa asphärische, torische, atorische oder progressive Flächen oder sogar Flächen mit einer Freiformgeometrie, je nach der gewünschten optischen Wirkung.

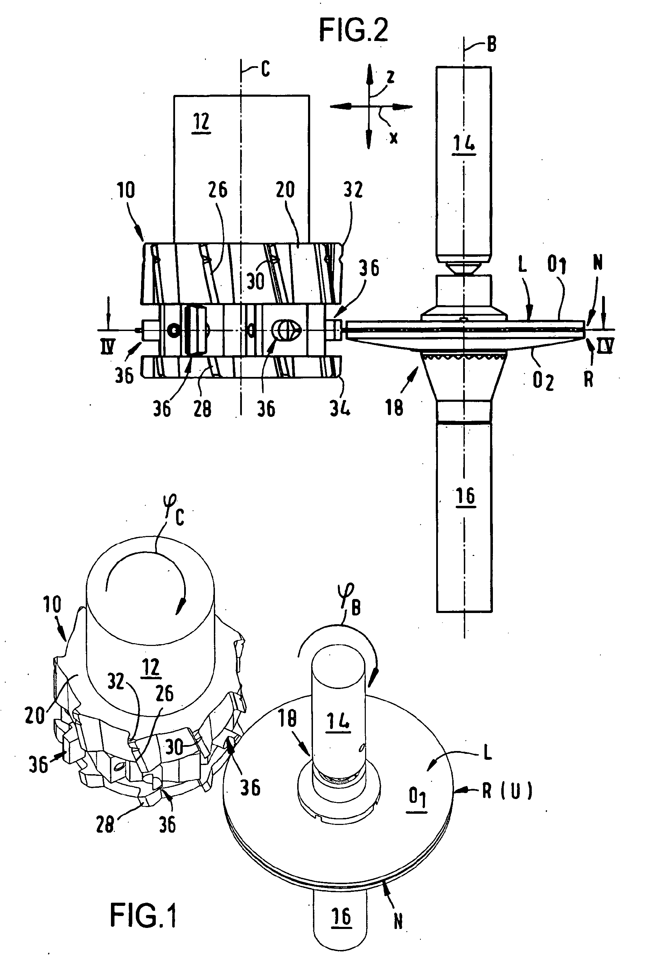

Von der Vorrichtung zur Randbearbeitung von Brillenlinsen L aus Kunststoff sind in den Fig. 1 bis 6 zur Vereinfachung der Darstellung nur die ein Kombinationswerkzeug 10 tragende, um die Werkzeugdrehachse C drehend antreibbare Werkzeugspindel 12 sowie die zwei fluchtenden, um die Werkstückdrehachse B drehend antreibbaren Haltewellen 14, 16 schematisch gezeigt, zwischen denen die Brillenlinse L einspannbar ist. Die Werkstückdrehachse B und die Werkzeugdrehachse C verlaufen hier parallel zueinander. Die Haltewellen 14, 16 sind um die Werkstückdrehachse B mittels eines geeigneten Antriebs und zugeordneter Steuerung (nicht dargestellt) im Drehwinkel ϕ_{B} geregelt drehbar. Weiterhin sind die Haltewellen 14, 16 und die Werkzeugspindel 12 lagegeregelt in einer ersten Achsrichtung X aufeinander zu bzw. voneinander weg und in einer rechtwinklig zur ersten Achsrichtung X verlaufenden zweiten Achsrichtung Z parallel zueinander bewegbar. Zweckmäßig sind diese axialen Bewegungsmöglichkeiten während der Randbearbeitung der Werkzeugspindel 12 zugeordnet. Hierfür sind geeignete Schlitten mit zugeordneten Führungen und Antrieben sowie jeweils zugeordneter Steuerung (nicht gezeigt) vorgesehen. Diesbezüglich wird hiermit ausdrücklich auf die DE 101 14 239 A1 der Anmelderin Bezug genommen. Neu demgegenüber ist, daß für eine Drehbearbeitung des zu bearbeitenden Randes R der Linse L das Kombinationswerkzeug 10 mittels der Werkzeugspindel 12 auch im Drehwinkel ϕ_{C} geregelt um die Werkzeugdrehachse C verschwenkbar ist, wofür ebenfalls ein geeigneter Antrieb nebst zugeordneter Steuerung (nicht dargestellt) vorhanden ist. Sowohl die Haltewellen 14, 16 als auch die Werkzeugspindel 12 können also in der Drehzahl n_{B}, n_{C} als auch im Drehwinkel ϕ_{B}, ϕ_{C} geregelt gedreht werden.

Zwischen den Haltewellen 14, 16 ist die Brillenlinse L mittels einer an sich bekannten Anordnung 18 zum Blocken und Spannen von Brillenlinsen L derart festgelegt, daß sie gleichachsig mit den Haltewellen 14, 16 drehen kann. Diese Anordnung 18 ist ausführlich in der DE 101 14 238 A1 der Anmelderin beschrieben, auf die hiermit diesbezüglich ausdrücklich Bezug genommen wird.

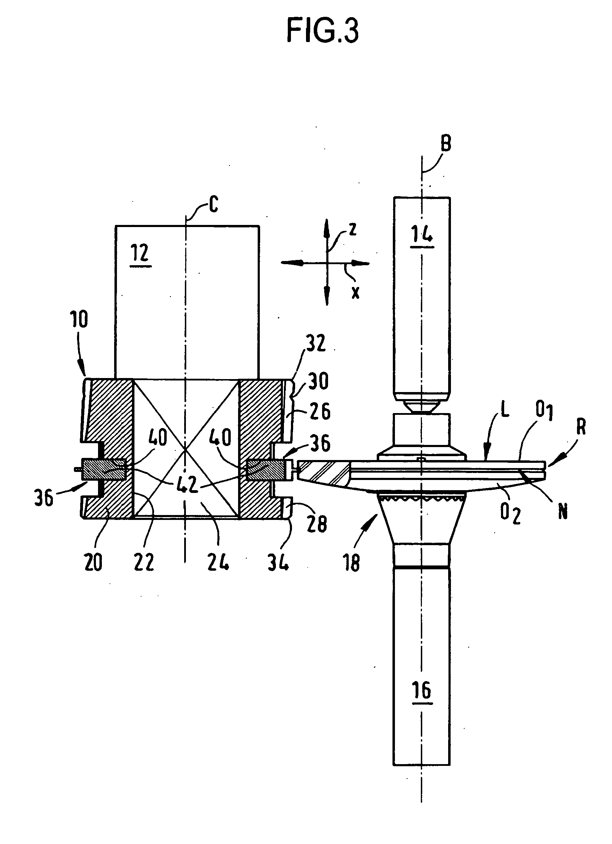

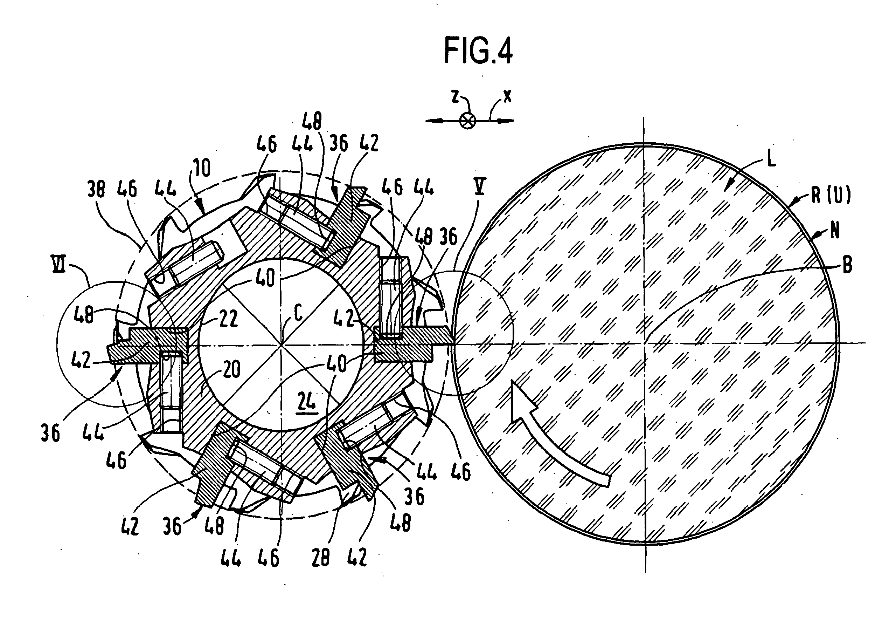

Gemäß den Fig. 1 bis 6 hat das Kombinationswerkzeug 10 einen metallischen Grundkörper 20, der zum einen der Befestigung an der Werkzeugspindel 12 und zum anderen als Träger der Schneidmittel dient. Wie die Fig. 3 und 4 zeigen, weist der Grundkörper 20 innenumfangsseitig eine Zylinderfläche 22 auf, mittels der das Kombinationswerkzeug 10 an der Werkzeugspindel 12 befestigt werden kann. In den Fig. 3 und 4 ist schematisch angedeutet, daß hierfür ein an die Werkzeugspindel 12 angeflanschter, handelsüblicher Dehnspanndorn 24 verwendet werden kann. Dieser kann über eine Spannschraube (nicht dargestellt) in radialer Richtung hydraulisch aufgeweitet werden, um den Grundkörper 20 kraftschlüssig drehfest mit der Werkzeugspindel 12 zu verbinden.

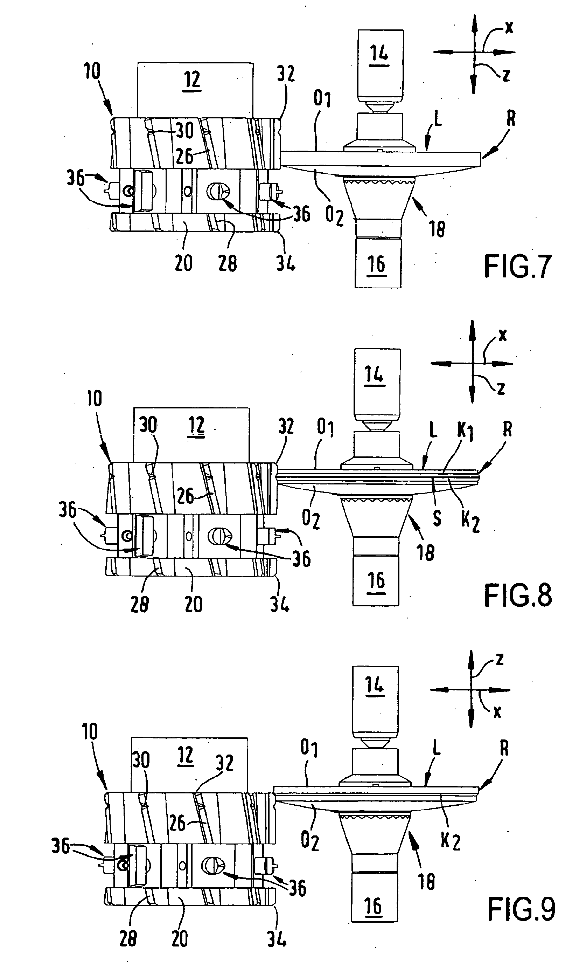

Am Außenumfang ist der ringförmige Grundkörper 20 an zwei axial voneinander beabstandeten Bereichen jeweils mit einer Mehrzahl von gleichmäßig über den Umfang verteilten, im dargestellten Ausführungsbeispiel neun Fräserschneiden 26, 28 versehen, die vorzugsweise auf dem Grundkörper 20 aufgelötet sind. Die Fräserschneiden 26, 28 definieren in einer Draufsicht von oben in Fig. 2 gesehen bei einer Drehung des Kombinationswerkzeugs 10 um die Werkzeugdrehachse C einen Flugkreis und dienen in erster Linie dazu, die Linse L am Rand R so vorzubearbeiten, daß die Linse L in der Draufsicht gesehen eine Umfangskontur U erhält, die ggf. bis auf ein geringfügiges Übermaß der Umfangskontur einer Fassung für die Linse L entspricht. Die Fig. 7 zeigt ein solches Vorbearbeiten des Randes R der Brillenlinse L mittels der Fräserschneiden 26, wobei der Rand R eine Geometrie entsprechend der Fig. 29 erhält. Hierbei rotiert das Kombinationswerkzeug 10 in der Drehzahl n_{C} geregelt um die Werkzeugdrehachse C, während die Brillenlinse L im Drehwinkel ϕ_{B} geregelt um die Werkstückdrehachse B gedreht wird. Zugleich wird das Kombinationswerkzeug 10 entsprechend der an der Brillenlinse L zu erzeugenden Umfangskontur U in Abhängigkeit vom Drehwinkel ϕ_{B} der Brillenlinse L in der X-Achse lagegeregelt auf die Werkstückdrehachse B zu bzw. davon weg bewegt.

Wie die Fig. 2 des weiteren veranschaulicht, verläuft bei diesem Ausführungsbeispiel jede Fräserschneide in einer Draufsicht mit Blickrichtung senkrecht zur Werkzeugdrehachse C gesehen bezüglich der Werkzeugdrehachse C geneigt, wobei sich die Fräserschneiden 26, 28 hinsichtlich ihrer Neigung nicht voneinander unterscheiden. Diese Neigung bzw. Schrägstellung der Fräserschneiden 26, 28 führt in vorteilhafter Weise zu im Vergleich zu parallel zur Werkzeugdrehachse C verlaufenden Fräserschneiden geringeren Prozeßkräften und einer reduzierten Spanbildung, was sich auf das Bearbeitungsergebnis, d.h. die Oberflächenqualität des bearbeiteten Randes R positiv auswirkt.

In den Fig. 1 und 2 ist ferner zu erkennen, daß die oberen Fräserschneiden 26 jeweils mit einer V-förmigen Aussparung 30 versehen sind, die zur Ausbildung einer Spitzfacette S auf dem Rand R der Linse L dient, wie sie in Fig. 30 dargestellt ist, wobei die V-förmigen Aussparungen 30 der Fräserschneiden 26 in Richtung der Werkzeugdrehachse C auf gleicher axialer Höhe angeordnet sind. Ein solches Anlegen einer Spitzfacette S mittels der V-förmigen Aussparungen 30 in den Fräserschneiden 26 ist in Fig. 8 dargestellt. Die Bewegungen des Kombinationswerkzeugs 10 und der Brillenlinse L um die Werkzeugdrehachse C bzw. die Werkstückdrehachse B sowie in X-Richtung erfolgen wie unter Bezugnahme auf die Fig. 7 beschrieben. Wenn die Spitzfacette S wie eingangs erläutert an unterschiedlichen Höhenpositionen am Rand R der Brillenlinse L auszubilden ist, wird das Kombinationswerkzeug 10 zugleich u.a. in Abhängigkeit vom Drehwinkel ϕ_{B} der Brillenlinse L in der Z-Achse lagegeregelt parallel zu den Haltewellen 14, 16 in Fig. 8 nach oben bzw. unten bewegt.

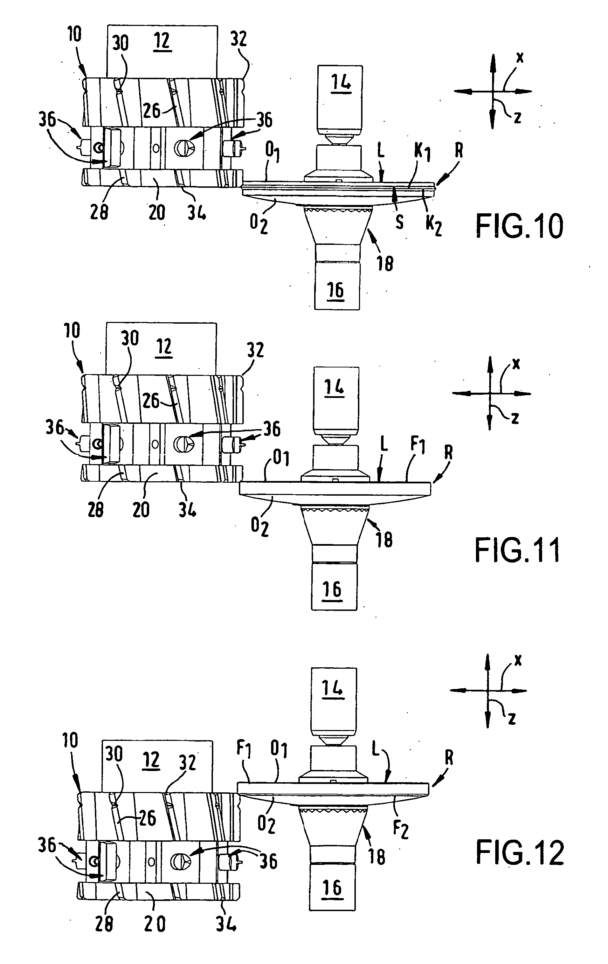

Weiterhin haben die in den Fig. 1 und 2 oberen Fräserschneiden 26 an ihrem oberen Ende jeweils eine Abschrägung 32, während die in den Fig. 1 und 2 unteren Fräserschneiden 28 an ihrem unteren Ende eine Abschrägung 34 aufweisen. Die Abschrägungen 32, 34 sind in Richtung der Werkzeugdrehachse C gesehen jeweils auf gleicher axialer Höhe angeordnet und schließen mit der restlichen Schneidkante der Fräserschneiden 26 bzw. 28 in einer Projektion betrachtet einen Winkel von z.B. 135° ein. Mittels dieser Abschrägungen können zum einen die Flanken K₁, K₂ einer Spitzfacette S gemäß Fig. 30 auf dem Rand R der Linse L ausgebildet werden, wie die Fig. 9 und 10 veranschaulichen, wobei zunächst (Fig. 9) die eine Flanke K₂ der Spitzfacette S durch die Abschrägungen 32 an einem, d.h. dem in Fig. 9 oberen Ende der Fräserschneiden 26 ausgebildet wird und sodann (Fig. 10) die andere Flanke K₁ der Spitzfacette S durch die Abschrägungen 34 am entgegengesetzten, d.h. in Fig. 10 unteren Ende der Fräserschneiden 28 ausgebildet wird. Zum anderen ist es möglich, mittels der Abschrägungen 32, 34 der Fräserschneiden 26, 28 Schutzfasen F₁, F₂ entsprechend Fig. 32 am Rand R der Brillenlinse L anzulegen. Dies ist in den Fig. 11 und 12 gezeigt. Bei den Bearbeitungsmöglichkeiten gemäß den Fig. 9 bis 12 erfolgen die Bewegungen des Kombinationswerkzeugs 10 und der Brillenlinse L um die Werkzeugdrehachse C bzw. die Werkstückdrehachse B sowie in der X-Richtung und ggf. der Z-Richtung wie unter Bezugnahme auf die Fig. 7 und 8 beschrieben. Zwar kann mit den V-förmigen Aussparungen 30 der Fräserschneiden 26 die Spitzfacette S am Rand R der Brillenlinse L schneller ausgebildet werden als mit den Abschrägungen 32, 34. Letztere haben aber u.a. den Vorteil, daß sie bei Verschleiß leichter nachgearbeitet werden können als die V-förmigen Aussparungen 30. Hinzu kommt, daß beim Anlegen der Spitzfacette S mittels der Abschrägungen 32, 34 der Fräserschneiden 26, 28 die Spitzfacette S in Z-Richtung gesehen stets nur von einer Seite geometriebildend bearbeitet wird. Im Gegensatz zu der gleichzeitigen zweiseitigen Bearbeitung mittels der V-förmigen Aussparungen 30 kann das Kombinationswerkzeug 10 also in Z-Richtung von der bearbeiteten Flanke K₁ bzw. K₂ der Spitzfacette S wegbewegt werden ohne zugleich an der anderen Flanke K₂ bzw. K₁ etwas zu verändern. Dieser Umstand kann insbesondere dann, wenn sich der Höhenverlauf der Spitzfacette S über den Umfang der Brillenlinse L gesehen stark ändert bzw. ändern soll, bei der Lageregelung des Kombinationswerkzeugs 10 in der Z-Achse zur Erzeugung einer Spitzfacettengeometrie genutzt werden, die exakter den Vorgaben entspricht als eine Spitzfacettengeometrie, die mit den V-förmigen Aussparungen 30 erzeugt wurde.

Wie insbesondere die Fig. 1 bis 4 zeigen, ist am Grundkörper 20 auch mindestens ein, im dargestellten Ausführungsbeispiel eine Mehrzahl von Drehmeißeln 36 vorgesehen, die in Richtung der Werkzeugdrehachse C bezüglich der Fräserschneiden 26, 28 axial versetzt, genauer axial zwischen den oberen Fräserschneiden 26 und den unteren Fräserschneiden 28 angeordnet sind. Wie nachfolgend noch näher erläutert werden wird, weisen die Drehmeißel 36 eine Schneidengeometrie auf, mittels der die Brillenlinse L am Rand R insbesondere so fertigbearbeitet werden kann, daß die Brillenlinse L am Rand R entsprechend ihrer an der Fassung vorgesehenen Befestigung im Querschnitt gesehen eine vorbestimmte Randgeometrie mit z.B. einer Spitzfacette S oder einer Nut N aufweist und/oder mit einer Schutzfase F₁, F₂ am Übergang zu einer oder beiden optisch wirksamen Flächen O₁, O₂ versehen und/oder poliert ist. Durch den axialen Versatz der Drehmeißel 36 bezüglich der Fräserschneiden 26, 28 können die Drehmeißel 36 auch über den von den Fräserschneiden 26, 28 definierten Flugkreis, der in Fig. 4 durch die gestrichelte Linie bei 38 angedeutet ist, nach radial außen überstehen, ohne bei der Fräsbearbeitung des Randes R der Brillenlinse L zu stören.

Da im dargestellten Ausführungsbeispiel mehrere Drehmeißel 36 an ein und demselben Kombinationswerkzeug 10 vorgesehen sind, können untereinander verschiedene Drehmeißel 36 eingesetzt werden, die hinsichtlich ihrer Geometrie - wie nachfolgend noch näher erläutert werden wird - und/oder des Drehschneidenmaterials - etwa Hartmetall mit oder ohne Verschleißschutz-Beschichtung oder auch PKD, CVD oder Naturdiamant für eine Polierbearbeitung des Randes R mittels des Drehmeißels 36-individuell an die zu erzeugende Randgeometrie und/oder gewünschte Oberflächenqualität und/oder an das zu zerspanende Material der Brillenlinse L angepaßt sind, so daß selbst für die Bearbeitung von in der zur erzeugenden Randgeometrie, gewünschten Oberflächenqualität bzw. dem Werkstoff verschiedenen Brillenlinsen L das Kombinationswerkzeug 10 nicht gewechselt werden muß. Die bei diesem Ausführungsbeispiel vorgesehene gleichmäßige Verteilung der Drehmeißel 36 am Umfang des Grundkörpers 20 hat den Vorteil, daß infolge der Drehmeißel 36 nur sehr geringe oder keine Unwuchten entstehen, die bei einem Einsatz des Kombinationswerkzeugs 10 als Fräser der Oberflächenqualität der erzeugten Randfläche abträglich sein könnten.

Grundsätzlich ist es zwar möglich, den wenigstens einen Drehmeißel einstückig mit dem Grundkörper auszubilden, etwa wie die Fräserschneiden am Grundkörper anzulöten. Bevorzugt ist jedoch die hier vorgesehene Ausgestaltung des Kombinationswerkzeugs 10, bei der die Drehmeißel 36 lösbar am Grundkörper 20 befestigt sind. Dies gestattet es nämlich in vorteilhafter Weise, einzelne Drehmeißel 36 auszutauschen oder zum Nacharbeiten vorübergehend vom Kombinationswerkzeug 10 zu trennen. Zu diesem Zweck sind in den Grundkörper 20 gemäß den Fig. 3 und 4 eine Mehrzahl von, im dargestellten Ausführungsbeispiel sechs Sacklöcher 40 mit jeweils einem geeigneten, beispielsweise kreisförmigen Lochquerschnitt eingebracht, die im Querschnitt gemäß Fig. 4 betrachtet in radialer Richtung, d.h. in Richtung auf die Werkzeugdrehachse C und im Längsschnitt gemäß Fig. 3 gesehen unter einem Winkel von 90° bezüglich der Werkzeugdrehachse C verlaufen. Die, wie bereits erwähnt, voneinander gleichmäßig winkelbeabstandeten Sacklöcher 40 dienen jeweils der formschlüssigen Aufnahme eines metallischen Schaftes 42 eines Drehmeißels 36. Zu diesem Zweck weist der Schaft 42 des Drehmeißels 36 einen zum Querschnitt des Sacklochs 40 im wesentlichen komplementären Querschnitt auf. Der im zugeordneten Sackloch 40 aufgenommene Schaft 42 des jeweiligen Drehmeißels 36 liegt endseitig am Boden des zugeordneten Sacklochs 40 an und ist in dieser Position durch eine Madenschraube 44 lösbar gesichert, die hierzu in eine zugeordnete Gewindebohrung 46 im Grundkörper 20 eingeschraubt ist und sich von dort in eine im Schaft 42 ausgebildete Aussparung 48 hinein erstreckt. Die Gewindebohrungen 46 liegen in einer gemeinsamen, zur Werkzeugdrehachse C senkrecht verlaufenden Ebene und erstrecken sich unter einem Winkel von 90° zum jeweils zugeordneten Sackloch 40. Es ist ersichtlich, daß die Drehmeißel 36 somit zugund druckfest als auch unverdrehbar am Grundkörper 20 lösbar festgelegt werden können.

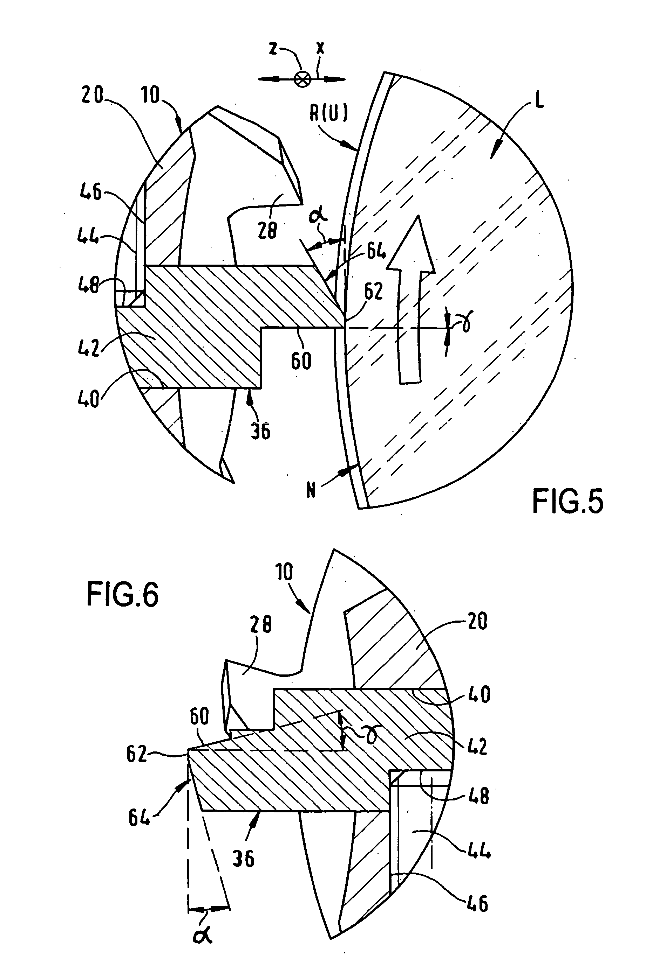

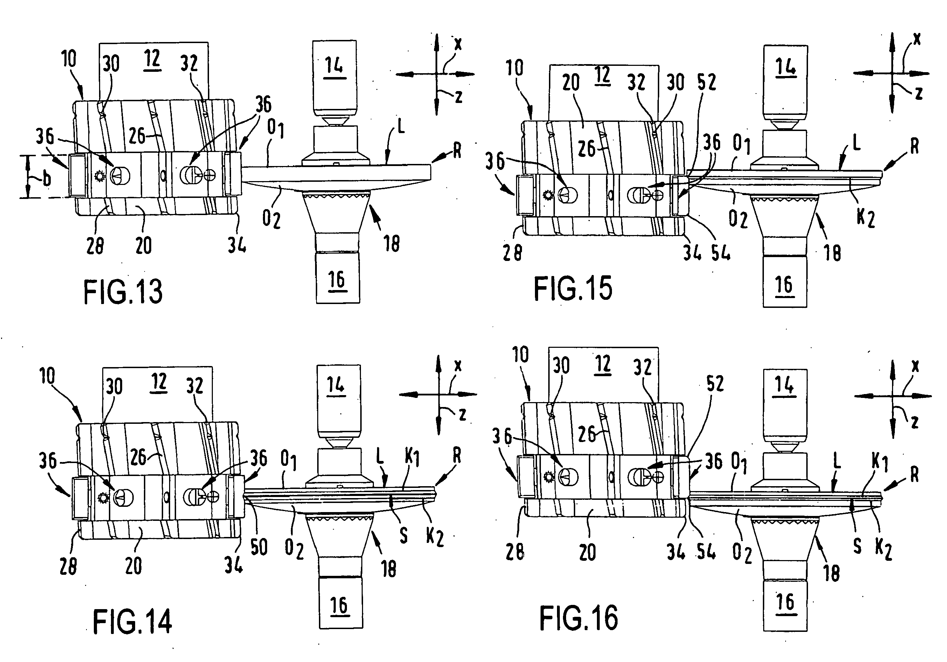

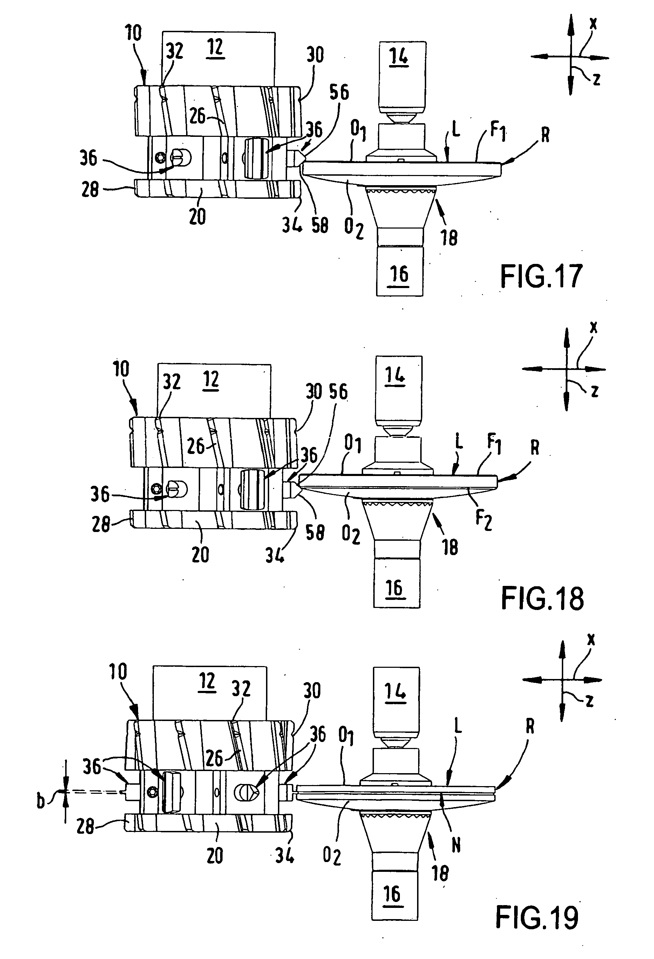

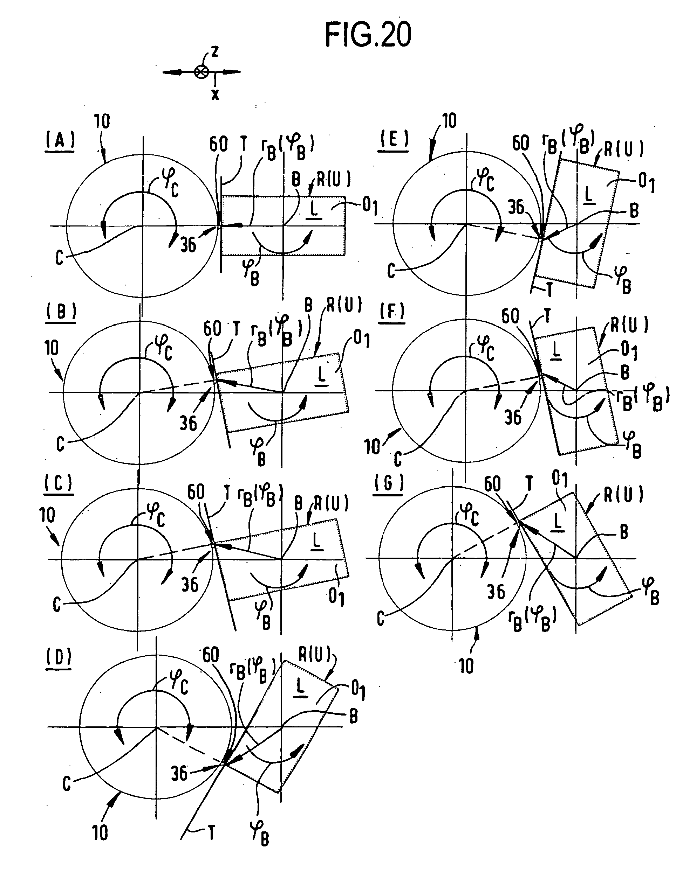

Die in den Fig. 1 bis 19 dargestellten Drehmeißel 36 sind aus einer Gruppe ausgewählt, welche die folgenden Drehmeißel 36 umfaßt, wobei vorab noch anzumerken ist, daß die nunmehr beschriebenen Drehmeißel 36 den jeweiligen Bearbeitungserfordernissen entsprechend an einem Kombinationswerkzeug 10 beliebig miteinander kombiniert werden können:
(A) Drehmeißel 36, deren Drehschneide eine Breite b aufweist, die größer ist als eine maximale Randdicke der damit zu bearbeitenden bzw. bearbeiteten Brillenlinse L. Ein solcher Drehmeißel 36 mit einer geraden, parallel zur Werkzeugdrehachse C verlaufenden Drehschneide ist in Fig. 13 im Einsatz gezeigt und kann dazu dienen, schon das Vorbearbeiten des Randes R der Brillenlinse L mittels eines Drehmeißels durchzuführen. Bevorzugt wird es hier jedoch, das Vorbearbeiten des Randes R der Linse L mittels der Fräserschneiden 26 des Kombinationswerkzeugs 10 auszuführen, da hiermit ein größerer Materialabtrag in kürzerer Zeit ohne die Gefahr einer die Bearbeitungsqualität möglicherweise beeinträchtigenden Fließspanbildung erzielt werden kann. Insofern werden die hier in Rede stehenden Drehmeißel 36 in erster Linie dazu benutzt, bei einer Randform der Brillenlinse L gemäß Fig. 29 den Rand R zu polieren, wofür der Drehmeißel 36 insbesondere eine bestimmte Schneidengeometrie aufweist, die nachfolgend unter Bezugnahme auf die Fig. 5 und 6 noch näher beschrieben werden wird. Bei dieser Bearbeitung erfolgt die Lageregelung des Kombinationswerkzeugs 10 in der X-Achse in Abhängigkeit vom Drehwinkel ϕ_{B} der Brillenlinse L wie unter Bezugnahme auf die Fig. 7 beschrieben, allerdings mit anderen Vorschüben. Die Schwenkbewegung des Kombinationswerkzeugs 10 um die Werkzeugdrehachse C wird noch anhand der Fig. 20 erläutert werden; dies gilt auch für die nachfolgend beschriebenen Drehmeißel 36.
(B) Drehmeißel 36, deren Drehschneide vorzugsweise mittig eine V-förmige Aussparung 50 hat, die zur Ausbildung einer Spitzfacette S auf dem Rand R der Brillenlinse L dient, wie sie in Fig. 30 dargestellt ist. Ein solcher Drehmeißel 36 mit einer ansonsten geraden, parallel zur Werkzeugdrehachse C verlaufenden Drehschneide ist in Fig. 14 im Einsatz gezeigt. Es ist ersichtlich, daß mit einem solchen Drehmeißel 36 die zwei Flanken K₁, K₂ der Spitzfacette S in einem Arbeitsgang erzeugt werden können. Dabei erfolgt die Lageregelung des Kombinationswerkzeugs 10 in der X-Achse und ggf. der Z-Achse in Abhängigkeit vom Drehwinkel ϕ_{B} der Brillenlinse L wie unter Bezugnahme auf die Fig. 8 beschrieben.
(C) Drehmeißel 36, deren Drehschneide an wenigstens einem Ende eine Abschrägung 52, 54 zur Ausbildung einer Flanke K₁, K₂ einer Spitzfacette S (siehe Fig. 30) auf dem Rand R der Brillenlinse L und/oder zum Anlegen einer Schutzfase F₁, F₂ (siehe Fig. 32) am Rand R der Brillenlinse L aufweist. Die Fig. 15 und 16 zeigen einen solchen Drehmeißel 36 mit einer ansonsten geraden, parallel zur Werkzeugdrehachse C verlaufenden Drehschneide im Einsatz, wobei hier allerdings nur das Ausbilden einer Spitzfacette S veranschaulicht ist. Demgemäß wird zunächst die eine Flanke K₂ der Spitzfacette S durch die Abschrägung 52 am in Fig. 15 oberen Ende der Drehschneide ausgebildet und sodann die andere Flanke K₁ der Spitzfacette S durch die Abschrägung 54 an dem anderen, d.h. in Fig. 16 unteren Ende der Drehschneide. Dabei wird das Kombinationswerkzeug 10 in Abhängigkeit vom Drehwinkel ϕ_{B} der Brillenlinse L entsprechend der gewünschten Umfangskontur U der bearbeiteten Brillenlinse L in der X-Achse und, soweit erforderlich, entsprechend dem gewünschten Höhenverlauf der Spitzfacette S bzw. der Schutzfasen F₁, F₂ auf bzw. an dem Rand R der Brillenlinse L in der Z-Achse lagegeregelt.
(D) Drehmeißel 36, deren Drehschneide eine Breite b hat, die kleiner oder gleich der Breite einer am Rand R der Brillenlinse L zu erzeugenden Rille oder Nut N ist, wie sie in Fig. 31 dargestellt ist. Ein solcher Drehmeißel 36, dessen Drehschneide vorzugsweise eine Schneidkante hat, die eine zum gewünschten Querschnitt der im Rand R der Brillenlinse L auszubildenden Nut N komplementäre Form aufweist, ist u.a. in Fig. 19 im Einsatz gezeigt. Auch bei diesem Fein- bzw. Fertigbearbeitungsschritt wird das Kombinationswerkzeug 10 in Abhängigkeit vom Drehwinkel ϕ_{B} der Brillenlinse L entsprechend der gewünschten Umfangskontur U der bearbeiteten Brillenlinse L sowie der gewünschten Tiefe der Nut N in der X-Achse und, soweit erforderlich, entsprechend dem gewünschten Höhenverlauf der Nut N am Rand R der Brillenlinse L in der Z-Achse lagegeregelt.
(E) Drehmeißel 36, deren Drehschneide zum Anlegen von Schutzfasen F₁, F₂ (siehe Fig. 32) am Rand R der Brillenlinse L zwei einander benachbarte, gerade Schneidenbereiche 56, 58 aufweist, die einen vorbestimmten Winkel miteinander einschließen. Die Fig. 17 und 18 zeigen einen solchen Drehmeißel 36 im Einsatz, bei dem die Schneidenbereiche 56, 58 bezüglich einer senkrecht zur Werkzeugdrehachse C verlaufenden Ebene spiegelsymmetrisch ausgebildet sein können und einen Winkel von z.B. 90° miteinander einschließen. Demgemäß wird zunächst die eine Schutzfase F₁ durch den Schneidenbereich 58 auf der in Fig. 17 unteren Seite der Drehschneide ausgebildet und sodann die andere Schutzfase F₂ durch den Schneidenbereich 56 auf der anderen, d.h. in Fig. 18 oberen Seite der Drehschneide. Hierbei wird das Kombinationswerkzeug 10 in Abhängigkeit vom Drehwinkel ϕ_{B} der Brillenlinse L entsprechend der gewünschten Umfangskontur U der bearbeiteten Brillenlinse L sowie der gewünschten Breite der Schutzfasen F₁, F₂ in der X-Achse und, soweit erforderlich, entsprechend dem Höhenverlauf des Randes R der Brillenlinse L in der Z-Achse lagegeregelt.
(F) Drehmeißel 36 zum Polieren des Randes R einer aus einem im Verhältnis weichen Kunststoff wie Polycarbonat bestehenden Brillenlinse L, die gemäß Fig. 6 einen negativen Spanwinkel γ haben, der bis zu -15° betragen kann, und/oder deren an die Spanfläche 60 anschließender Bereich 62 der Freifläche 64 gemäß den Fig. 5 und 6 einen Freiwinkel α aufweist, der gleich Null ist oder annähernd Null beträgt, bevor er im weiteren ggf. einen positiven Wert annimmt. Während oben an den Drehschneiden der Drehmeißel 36 gemäß (A) bis (E) Maßnahmen beschrieben wurden, die sich in einer Ebene abspielen, welche die Werkzeugdrehachse C des Kombinationswerkzeugs 10 enthält, um durch (Fein)Drehbearbeitung auf die Makrogeometrie des Randes R der Brillenlinse L entsprechend den Fig. 29 bis 32 Einfluß zu nehmen, zeigen die Fig. 5 und 6 Maßnahmen an der Schneidengeometrie des Drehmeißels 36 in einer zur Werkzeugdrehachse C senkrechten Ebene, mittels der durch (Fein)Drehbearbeitung auf die Mikrogeometrie des Randes R der Brillenlinse L, d.h. auf die Oberflächenqualität des Randes R bzw. Teilen davon Einfluß genommen werden kann.

Durch die angesprochene Gestaltung des Freiwinkels α im an die Schneidkante des Drehmeißels 36 angrenzenden Bereich 62 der Freifläche 64 bzw. des Spanwinkels γ der Spanfläche 60 werden zwei verschiedene Effekte bewirkt, die den jeweiligen Erfordernissen entsprechend auch unabhängig voneinander eingesetzt werden können, d.h. obgleich in den Fig. 5 und 6 nicht gezeigt, könnte die Schneidengeometrie des Drehmeißels 36 auch derart gewählt sein, daß nur der Spanwinkel γ einen negativen Wert aufweist, der Freiwinkel α hingegen an jeder Stelle der Freifläche 64 deutlich größer Null ist. Bei einem negativen Wert für den Spanwinkel γ (siehe Fig. 6) wird bei der (Fein)Drehbearbeitung die Schneidkante des Drehmeißels 36 quasi über den bearbeiteten Rand R der Brillenlinse L "gezogen", wobei die Schneidkante das Linsenmaterial eher wegdrückt als, wie im Fall eines positiven Spanwinkels γ, schneidet. Infolgedessen kommt es zu einer plastischen (Kalt)Verformung des Linsenmaterials, bei der Oberflächenrauhigkeiten geglättet werden.

Wenn der Freiwinkel α im an die Spanfläche 60 angrenzenden Bereich 62 der Freifläche 64 gleich Null ist oder annähernd Null beträgt (siehe die Fig. 5 und 6), kommt es bei der (Fein)Drehbearbeitung zu einem "Nachdrücken" des Freiflächenbereichs 62 gegen den Rand R der Brillenlinse L. Infolge der Reibung zwischen dem Freiflächenbereich 62 und dem relativ dazu bewegten Rand R der Brillenlinse L wird in den Rand R - in Abhängigkeit von u.a. der Relativgeschwindigkeit in Umfangsrichtung, dem Vorschub des Kombinationswerkzeugs 10 in der X-Achse, dem Material der Drehschneide des Drehmeißels 36 und der Brillenlinse L sowie den Schmierbedingungen - Wärme eingebracht, die zu einem Plastifizieren bzw. Erweichen des Linsenmaterials am Rand R führt, was wiederum eine Glättung der Randoberfläche zur Folge hat.

Für den Fachmann ist ersichtlich, daß die an den Drehmeißeln 36 gemäß (A) bis (F) vorgesehenen Maßnahmen - wo technisch sinnfällig - den jeweiligen Erfordernissen entsprechend auch miteinander kombiniert werden können. Insbesondere können die Drehmeißel 36 gemäß (A) bis (E) auch eine Schneidengeometrie gemäß (F) aufweisen.

Ergänzend zu den Fig. 5, 6 und 13 bis 19 veranschaulicht die Fig. 20 die überlagerten Bewegungen des Drehmeißels 36 des Kombinationswerkzeugs 10 um die Werkzeugdrehachse C und in der X-Achse während der (Fein)Drehbearbeitung des Randes R einer Brillenlinse L, die eine rechteckige Umfangskontur U aufweist. Durch Regelung in der C-Achse wird das Kombinationswerkzeug 10 vor der (Fein)Drehbearbeitung des Randes R der Brillenlinse L zunächst derart um die Werkzeugdrehachse C verschwenkt, daß der bzw. bei mehreren Drehmeißeln 36 ein bestimmter Drehmeißel 36 in der Folge ggf. unter radialer Zustellung des Kombinationswerkzeugs 10 relativ zur Werkstückdrehachse B, d.h. einer eventuellen Lageregelung in der X-Achse, mit dem Rand R der Brillenlinse L in einer vorbestimmten Relativlage zwischen Drehmeißel 36 und Rand R in Berührung kommt, bei der die Spanfläche 60 des Drehmeißels 36 einen vorbestimmten Winkel mit einer an den Rand R an der jeweiligen Berührstelle zum Drehmeißel 36 angelegten Tangente T einschließt. Somit wird ein definierter Drehbearbeitungseingriff zwischen Drehmeißel 36 und Linsenrand R herbeigeführt.

Weicht die Umfangskontur U der Brillenlinse L wie im hier gezeigten Beispiel von der Kreisform ab, wird sodann das geeignet radial, d.h. in der X-Achse relativ zur Werkstückdrehachse B bewegte bzw. zugestellte Kombinationswerkzeug 10 während der (Fein)Drehbearbeitung des Randes R der sich im Drehwinkel ϕ_{B} geregelt drehenden Linse L in Abhängigkeit vom Drehwinkel ϕ_{B} und vom zu erzeugenden Radius r_{B}(ϕ_{B}) der Brillenlinse L im Drehwinkel ϕ_{C} -- ϕ_{C} = f [ϕ_{B}, r_{B}(ϕ_{B})] -- geregelt derart um die Werkzeugdrehachse C verschwenkt, daß der vorbestimmte Winkel zwischen der Spanfläche 60 des Drehmeißel 36 und der Tangente T an der jeweiligen Berührstelle zwischen Drehmeißel 36 und Rand R im wesentlichen konstant bleibt, um den definierten Drehbearbeitungseingriff zwischen Drehmeißel 36 und Linsenrand R zur Erzielung des gewünschten Bearbeitungsergebnisses aufrechtzuerhalten. Es handelt sich hierbei also um ein CNC-geregeltes, kontinuierliches Nachführen der Drehschneide des Drehmeißels 36, wobei es, wie die Fig. 20 zeigt, auch zu einer Richtungsumkehr der Schwenkbewegung des Kombinationswerkzeugs 10 um die Werkzeugdrehachse C kommen kann.

Aus der obigen Beschreibung ist ersichtlich, daß mit dem vorgeschlagenen Kombinationswerkzeug 10 ein Vorbearbeiten des Randes R der Brillenlinse L insbesondere mittels der Fräserschneiden 26, 28 des in der Drehzahl n_{C} geregelt um die Werkzeugdrehachse C rotierenden Kombinationswerkzeugs 10 erfolgt, bevor ein Fertigbearbeiten des Randes R der Brillenlinse L insbesondere mittels eines oder mehreren am Kombinationswerkzeug 10 vorgesehenen Drehmeißeln 36 unter einer im Drehwinkel ϕ_{C} geregelten Schwenkbewegung des Kombinationswerkzeugs 10 um die Werkzeugdrehachse C stattfindet. Dabei wird zweckmäßig der Rand R der Brillenlinse L vor dem Vorbearbeiten des Randes R und/oder zwischen dem Vorbearbeiten und dem Fertigbearbeiten des Randes R im Hinblick auf Radienwerte r_{B}(ϕ_{B}) und ggf. Höhenwerte z_{B}(ϕ_{B}) (siehe die Fig. 29 bis 32) vermessen, worauf das Vorbearbeiten bzw. das Fertigbearbeiten des Randes R unter Berücksichtigung der gemessen Werte r_{B}(ϕ_{B}), z_{B}(ϕ_{B}) durchgeführt wird. Hinsichtlich eines hierfür geeigneten Meßverfahrens wird hiermit ausdrücklich auf die DE 101 19 662 A1 der Anmelderin Bezug genommen.

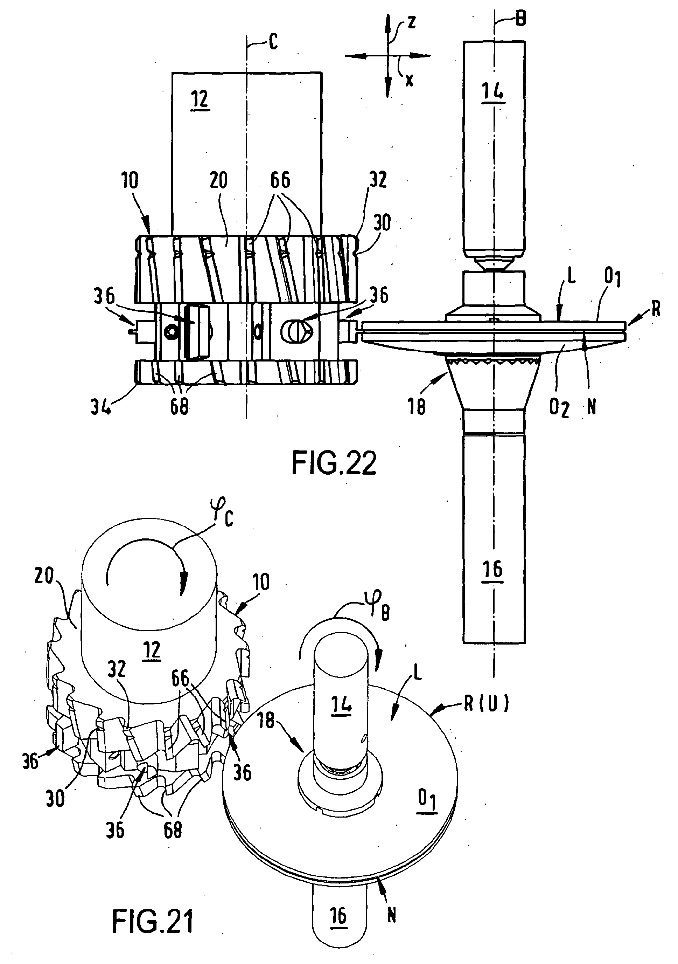

Nachfolgend soll das zweite bis fünfte Ausführungsbeispiel des Kombinationswerkzeugs 10 unter Bezugnahme auf die Fig. 21 bis 28 nur insoweit beschrieben werden, als es sich vom ersten Ausführungsbeispiel unterscheidet, wobei gleiche Bezugszeichen gleiche oder entsprechende Bauelemente bzw. Teile kennzeichnen.

Das in den Fig. 21 und 22 dargestellte zweite Ausführungsbeispiel des Kombinationswerkzeugs 10 unterscheidet sich vom ersten Ausführungsbeispiel nur hinsichtlich der Ausbildung der Fräserschneiden 66, 68. Diese haben zwar ebenso wie bei dem ersten Ausführungsbeispiel eine leicht gekrümmte Form, sind hierbei - jeweils in einer Draufsicht mit Blickrichtung senkrecht zur Werkzeugdrehachse C gesehen - aber nicht gleichermaßen bezüglich der Werkzeugdrehachse C geneigt. Vielmehr sind die Fräserschneiden 66, 68 mit zwei unterschiedlichen Neigungen in eine Richtung, nämlich nach links in Fig. 22, alternierend am Umfang des Grundkörpers 20 angeordnet. Die unterschiedlichen Neigungen bzw. Steigungen der Fräserschneiden 66, 68 führen zu im Vergleich zu den Fräserschneiden 26, 28 beim ersten Ausführungsbeispiel noch geringeren Prozeßkräften und einer noch weiter reduzierten Spanbildung, was sich auf die Oberflächenqualität des bearbeiteten Randes R der Brillenlinse L positiv auswirkt.

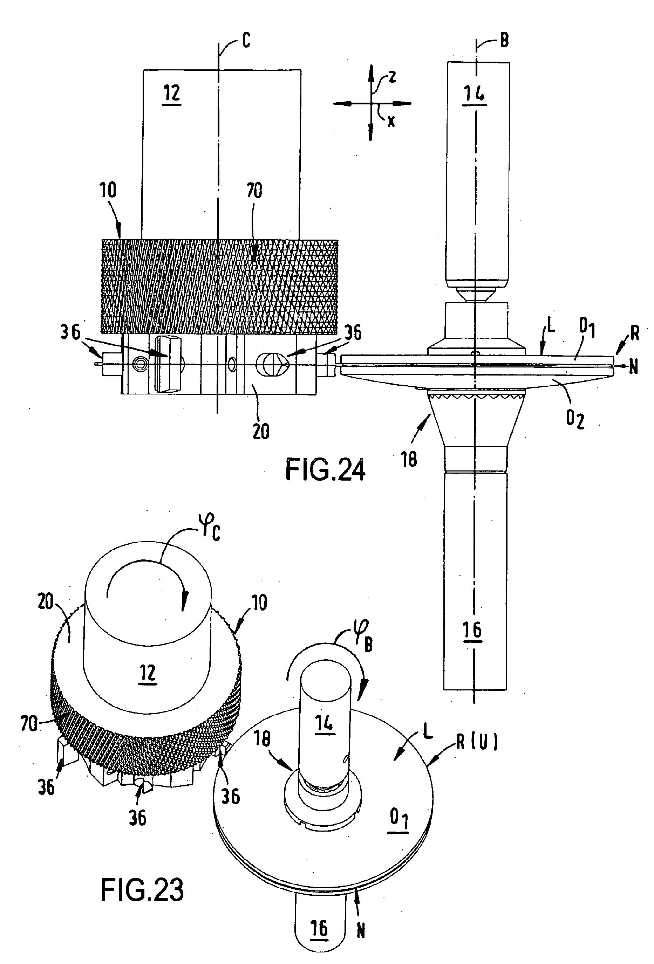

Bei dem dritten Ausführungsbeispiel gemäß den Fig. 23 und 24 weist das Kombinationswerkzeug 10 nur einen Fräserabschnitt auf, der bezüglich der Drehmeißel 36 axial versetzt angeordnet ist. Hier hat der Fräserabschnitt eine Mehrzahl von Fräserschneiden 70, von denen, wie in den Fig. 23 und 24 eher schematisch angedeutet ist, in Umfangsrichtung benachbarte Fräserschneiden 70 bezüglich der Werkzeugdrehachse C in entgegengesetzten Richtungen geneigt verlaufen, d.h. einmal nach links und einmal nach rechts, und die entgegengesetzt geneigten Fräserschneiden 70 alternierend am Umfang des Grundkörpers 20 angeordnet sind. Aufgrund dieser Gestaltung bilden die Fräserschneiden 70 auf dem Grundkörper 20 eine Kreuzstruktur aus, die links- und rechtsschneidend ist. Im Vergleich zum ersten und zweiten Ausführungsbeispiel führt dies zu noch geringeren Prozeßkräften und weiter reduzierter Spanbildung beidseitig. Auch hier bewirkt die Neigung der Fräserschneiden 70 eine Reduktion der Schlagwirkung der einzelnen Fräserschneide 70 und somit eine verringerte Induktion von Schwingungen bei der Fräsbearbeitung. Außerdem kommt ein immer existenter Rundlauffehler des Kombinationswerkzeugs 10 nicht zu seiner vollen Wirkung. Ebenso wie bei dem ersten und zweiten Ausführungsbeispiel die V-förmigen Aussparungen 30 und/oder die Abschrägungen 32, 34 an den Fräserschneiden 26, 28 bzw. 66, 68 den jeweiligen Bearbeitungserfordernissen entsprechend auch weggelassen werden können, kann der Fräserabschnitt beim dritten Ausführungsbeispiel, falls erforderlich, auch solche V-förmigen Aussparungen und/ oder endseitigen Abschrägungen aufweisen.

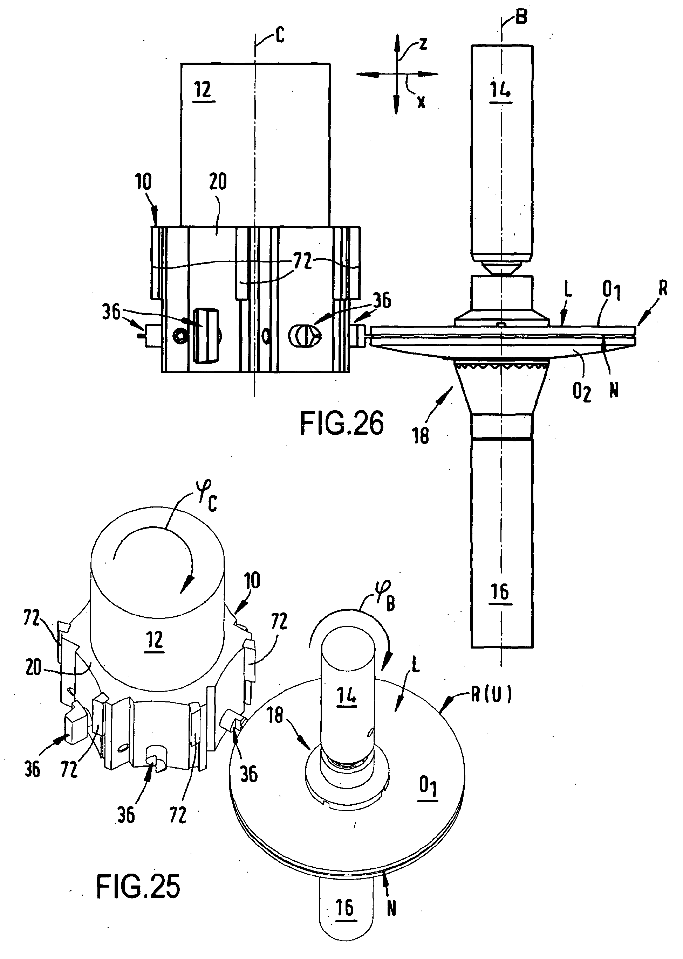

Die Fig. 25 und 26 veranschaulichen anhand eines vierten Ausführungsbeispiels des Kombinationswerkzeugs 10 eine gegenüber dem ersten bis dritten Ausführungsbeispiel vereinfachte Ausgestaltung des Fräserabschnitts, dessen Fräserschneiden 72 hier parallel zur Werkzeugdrehachse C verlaufen. Solche Fräserschneiden 72, die ggf. entsprechend dem ersten und zweiten Ausführungsbeispiel eine V-förmige Aussparung und/oder endseitige Abschrägungen aufweisen können, lassen sich besonders leicht herstellen und nacharbeiten.

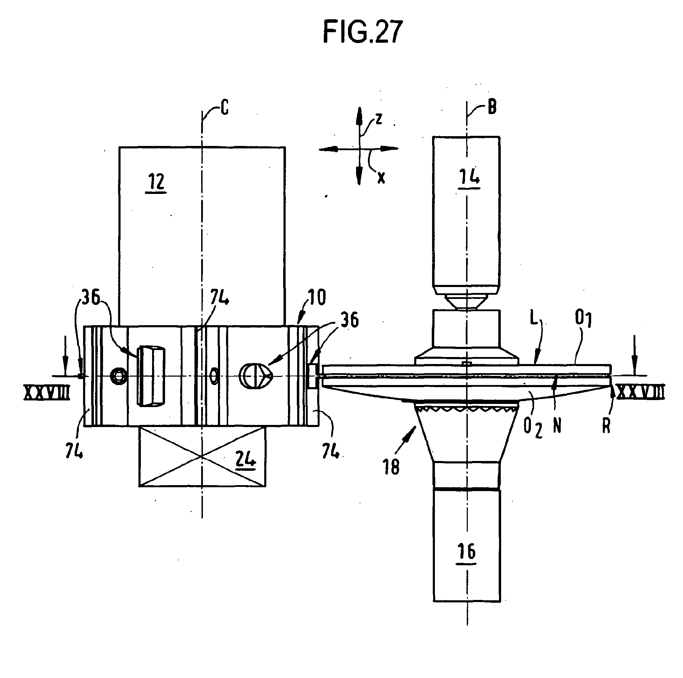

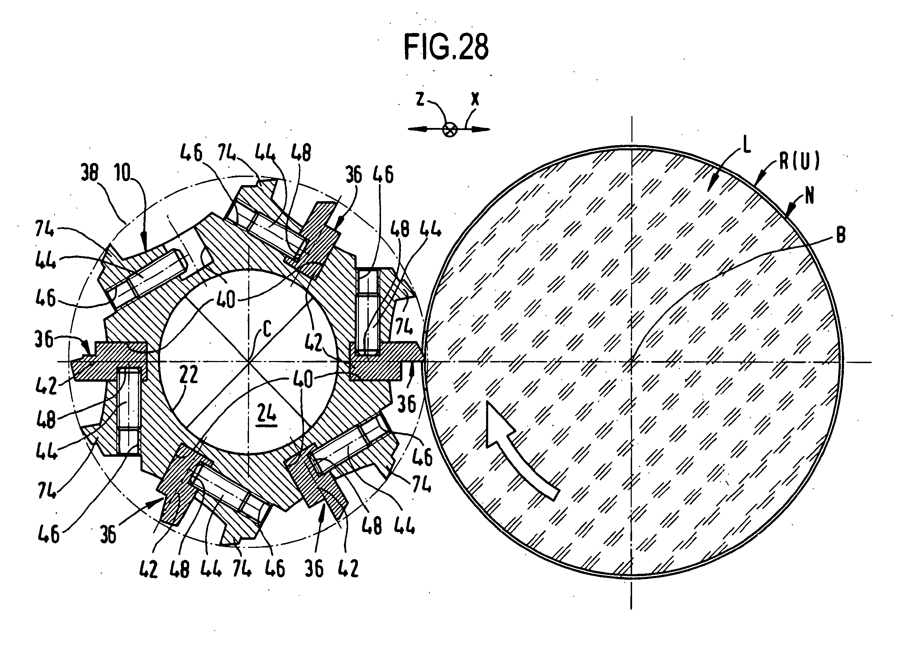

Bei dem fünften Ausführungsbeispiel des Kombinationswerkzeugs 10 gemäß den Fig. 27 und 28 schließlich sind die Drehmeißel 36 auf axialer Höhe der bei diesem Ausführungsbeispiel parallel zur Werkzeugdrehachse C verlaufenden Fräserschneiden 74 mit jeweils einer gegenüber dem Flugkreis 38 der Fräserschneiden 74 radial nach innen versetzten Drehschneide in Umfangsrichtung des Kombinationswerkzeugs 10 mit gleichmäßiger Winkelverteilung zwischen den Fräserschneiden 74 angeordnet. Die Befestigung der Drehmeißel 36 am Grundkörper 20 erfolgt hier analog der zum ersten Ausführungsbeispiel beschriebenen Befestigung der Drehmeißel 36. Diese Ausgestaltung hat den Vorteil, daß das Kombinationswerkzeug 10 gegenüber dem ersten bis vierten Ausführungsbeispiel in axialer Richtung, d.h. in Richtung der Werkzeugdrehachse C noch kürzer baut. Auch beim fünften Ausführungsbeispiel können die Fräserschneiden 74 ggf. V-förmige Aussparungen und/oder endseitige Abschrägungen aufweisen. Letztendlich ist es ebenfalls denkbar, eine solche Anordnung der Drehmeißel 36 auf axialer Höhe der Fräserschneiden in Umfangsrichtung gesehen zwischen den Fräserschneiden auch bei den anhand des ersten bis dritten Ausführungsbeispiels beschriebenen Ausgestaltungen der Fräserschneiden zu treffen. Ggf. wäre(n) dann ein oder mehrere Sektor(en) am Grundkörper 20 von Fräserschneiden freizuhalten und der oder die Drehmeißel 36 an dieser/diesen Stelle(n) vorzusehen.

Es wird eine Vorrichtung zur Randbearbeitung von insbesondere Kunststoff-Brillenlinsen offenbart, mit zwei fluchtenden, um eine Werkstückdrehachse B im Drehwinkel ϕ_{B} geregelt drehbaren Haltewellen, zwischen denen die Linse einspannbar ist, und einer Werkzeugspindel, mittels der ein Kombinationswerkzeug um eine Werkzeugdrehachse C drehend antreibbar ist, die zu der Werkstückdrehachse B parallel verläuft. Die Haltewellen und die Werkzeugspindel sind lagegeregelt in einer ersten Achsrichtung X aufeinander zu und ggf. in einer rechtwinklig zur ersten Achsrichtung X verlaufenden zweiten Achsrichtung Z parallel zueinander bewegbar. Erfindungsgemäß ist für eine Drehbearbeitung des Linsenrandes R das Kombinationswerkzeug mittels der Werkzeugspindel im Drehwinkel ϕ_{C} geregelt um die Werkzeugdrehachse C verschwenkbar, so daß ein am Kombinationswerkzeug vorgesehener Drehmeißel mit dem Linsenrand R in einen definierten Drehbearbeitungseingriff bringbar ist. Die Erfindung umfaßt auch ein kombiniertes Fräs- und Drehbearbeitungsverfahren. Im Ergebnis ist der Linsenrand R sehr flexibel, schnell und mit hoher Bearbeitungsqualität bearbeitbar.

### Bezugszeichenliste

- 10: Kombinationswerkzeug
- 12: Werkzeugspindel
- 14: Haltewelle
- 16: Haltewelle
- 18: Anordnung zum Blocken und Spannen
- 20: Grundkörper
- 22: Zylinderfläche
- 24: Dehnspanndorn
- 26: Fräserschneide
- 28: Fräserschneide
- 30: V-förmige Aussparung
- 32: Abschrägung
- 34: Abschrägung
- 36: Drehmeißel
- 38: Flugkreis
- 40: Sackloch
- 42: Schaft
- 44: Madenschraube
- 46: Gewindebohrung
- 48: Aussparung
- 50: V-förmige Aussparung
- 52: Abschrägung
- 54: Abschrägung
- 56: Schneidenbereich
- 58: Schneidenbereich
- 60: Spanfläche
- 62: Freiflächenbereich
- 64: Freifläche
- 66: Fräserschneide
- 68: Fräserschneide
- 70: Fräserschneiden
- 72: Fräserschneide
- 74: Fräserschneide
- b: Breite des Drehmeißels
- r_{B}: Radius des Randes
- z_{B}: Höhenwert des Randes
- α: Freiwinkel
- γ: Spanwinkel
- ϕ_{B}: Drehwinkel der Linse
- ϕ_{C}: Drehwinkel des Werkzeugs

- B: Werkstückdrehachse
- C: Werkzeugdrehachse
- F₁, F₂: Schutzfase
- K₁, K₂: Flanke
- L: Brillenlinse
- N: Nut
- O₁, O₂: optisch wirksame Fläche
- R: Rand
- S: Spitzfacette
- U: Umfangskontur
- X: Linearachse
- Z: Linearachse

## Patentansprüche

1. Verfahren zur Randbearbeitung einer optischen Linse (L), namentlich einer Brillenlinse aus Kunststoff, die im Drehwinkel (ϕ_{B}) geregelt um eine Werkstückdrehachse (B) drehbar ist, mit den Schritten:
Vorbearbeiten des Randes (R) der Linse (L) mittels eines relativ zur Werkstückdrehachse (B) wenigstens radial zustellbaren und um eine Werkzeugdrehachse (C) drehbaren Kombinationswerkzeugs (10), wobei die Linse (L) in der Draufsicht gesehen eine Umfangskontur (U) erhält, die ggf. bis auf ein geringfügiges Übermaß der Umfangskontur einer Fassung für die Linse (L) entspricht, und
Fertigbearbeiten des Randes (R) der Linse (L) mittels des Kombinationswerkzeugs (10), wobei die Linse (L) am Rand (R) entsprechend ihrer an der Fassung vorgesehenen Befestigung im Querschnitt gesehen eine vorbestimmte Randgeometrie erhält, ggf. mit einer Schutzfase (F₁, F₂) am Übergang zu einer oder beiden optisch wirksamen Flächen (O₁, O₂) versehen wird und ggf. poliert wird,
**dadurch gekennzeichnet, daß** das Vorbearbeiten des Randes (R) und das Fertigbearbeiten des Randes (R) mittels eines sowohl Fräserschneiden (26, 28; 66, 68; 70; 72; 74) als auch mindestens einen Drehmeißel (36) aufweisenden Kombinationswerkzeugs (10) erfolgt, das während einer Fräsbearbeitung des Randes (R) in der Drehzahl (n_{C}) geregelt um die Werkzeugdrehachse (C) gedreht wird und das vor und ggf. auch während einer Drehbearbeitung des Randes (R) im Drehwinkel (ϕ_{C}) geregelt um die Werkzeugdrehachse (C) verschwenkt wird.

2. Verfahren nach Anspruch 1, **dadurch gekennzeichnet, daß** das Kombinationswerkzeug (10) vor einer Drehbearbeitung des Randes (R) der Linse (L) im Drehwinkel (ϕ_{C}) geregelt derart um die Werkzeugdrehachse (C) verschwenkt wird, daß der Drehmeißel (36) in der Folge ggf. unter radialer Zustellung des Kombinationswerkzeugs (10) relativ zur Werkstückdrehachse (B) mit dem Rand (R) in einer vorbestimmten Relativlage zwischen Drehmeißel (36) und Rand (R) in Berührung kommt, bei der die Spanfläche (60) des Drehmeißels (36) einen vorbestimmten Winkel mit einer an den Rand (R) an der jeweiligen Berührstelle zum Drehmeißel (36) angelegten Tangente (T) einschließt.

3. Verfahren nach Anspruch 2, **dadurch gekennzeichnet, daß** das geeignet radial relativ zur Werkstückdrehachse (B) zugestellte Kombinationswerkzeug (10) während einer Drehbearbeitung des Randes (R) einer sich drehenden Linse (L), deren zu erzeugende Umfangskontur (U) von der Kreisform abweicht, in Abhängigkeit vom Drehwinkel (ϕ_{B}) und vom zu erzeugenden Radius (r_{B}(ϕ_{B})) der Linse (L) im Drehwinkel (ϕ_{C} = f [ϕ_{B}, r_{B}(ϕ_{B})]) geregelt derart um die Werkzeugdrehachse (C) verschwenkt bzw. nachgeführt wird, daß der vorbestimmte Winkel zwischen der Spanfläche (60) des Drehmeißels (36) und der Tangente (T) an der jeweiligen Berührstelle zwischen Drehmeißel (36) und Rand (R) im wesentlichen konstant bleibt.

4. Verfahren nach einem der vorhergehenden Ansprüche, **dadurch gekennzeichnet, daß** das Vorbearbeiten des Randes (R) der Linse (L) mittels der Fräserschneiden (26, 28; 66, 68; 70; 72; 74) des Kombinationswerkzeugs (10) erfolgt (Fig. 7).

5. Verfahren nach einem der vorhergehenden Ansprüche, **dadurch gekennzeichnet, daß** beim Fertigbearbeiten des Randes (R) der Linse (L) am Rand (R) eine Spitzfacette (S) mit zwei Flanken (K₁, K₂) mittels der Fräserschneiden (26, 28; 66, 68) des Kombinationswerkzeugs (10) erzeugt wird (Fig. 9, 10), die hierfür endseitig Abschrägungen (32, 34) aufweisen, wobei zunächst die eine Flanke (K₂) der Spitzfacette (S) durch die Abschrägungen (32) an einem Ende der Fräserschneiden ausgebildet wird und sodann die andere Flanke (K₁) der Spitzfacette (S) durch die Abschrägungen (34) an dem entgegengesetzten Ende der Fräserschneiden ausgebildet wird.

6. Verfahren nach einem der Ansprüche 1 bis 4, **dadurch gekennzeichnet, daß** beim Fertigbearbeiten des Randes (R) der Linse (L) am Rand (R) eine Spitzfacette (S) mit zwei Flanken (K₁, K₂) mittels eines Drehmeißels (36) des Kombinationswerkzeugs (10) erzeugt wird (Fig. 14), dessen Drehschneide hierfür eine V-förmige Aussparung (50) aufweist.

7. Verfahren nach einem der Ansprüche 1 bis 4, **dadurch gekennzeichnet, daß** beim Fertigbearbeiten des Randes (R) der Linse (L) am Rand (R) eine Spitzfacette (S) mit zwei Flanken (K₁, K₂) mittels eines Drehmeißels (36) des Kombinationswerkzeugs (10) erzeugt wird (Fig. 15, 16), dessen Drehschneide hierfür an beiden Enden jeweils eine Abschrägung (52, 54) aufweist, wobei zunächst die eine Flanke (K₂) der Spitzfacette (S) durch die Abschrägung (52) an einem Ende der Drehschneide ausgebildet wird und sodann die andere Flanke (K₁) der Spitzfacette (S) durch die Abschrägung (54) an dem anderen Ende der Drehschneide ausgebildet wird.

8. Verfahren nach einem der Ansprüche 1 bis 4, **dadurch gekennzeichnet, daß** beim Fertigbearbeiten des Randes (R) der Linse (L) am Rand (R) eine Nut (N) mittels eines Drehmeißels (36) des Kombinationswerkzeugs (10) erzeugt wird (Fig. 19), dessen Drehschneide eine Breite (b) hat, die kleiner oder gleich der Breite der zu erzeugenden Nut (N) ist.

9. Verfahren nach einem der vorhergehenden Ansprüche, **dadurch gekennzeichnet, daß** beim Fertigbearbeiten des Randes (R) der Linse (L) am Rand (R) am Übergang zu wenigstens einer der beiden optisch wirksamen Flächen (O₁, O₂) eine Schutzfase (F₁, F₂) mittels eines Drehmeißels (36) des Kombinationswerkzeugs (10) erzeugt wird, dessen Drehschneide wenigstens an einem Ende eine Abschrägung (52, 54) hat oder zwei einander benachbarte gerade Schneidenbereiche (56, 58) aufweist (Fig. 17, 18), die einen vorbestimmten Winkel miteinander einschließen.

10. Verfahren nach einem der vorhergehenden Ansprüche, **dadurch gekennzeichnet, daß** beim Fertigbearbeiten des Randes (R) einer Linse (L), die aus einem im Verhältnis weichen Kunststoff wie Polycarbonat besteht, wenigstens ein Teil des Randes (R) mittels eines Drehmeißels (36) poliert wird, dessen Spanwinkel (γ) negativ ist (Fig. 6) und/oder dessen an die Spanfläche (60) anschließender Bereich (62) der Freifläche (64) einen Freiwinkel (α) aufweist, der gleich Null ist oder annähernd Null beträgt (Fig. 5, 6).

11. Verfahren nach einem der vorhergehenden Ansprüche, **dadurch gekennzeichnet, daß** der Rand (R) der Linse (L) vor dem Vorbearbeiten des Randes (R) und/oder zwischen dem Vorbearbeiten und dem Fertigbearbeiten des Randes (R) im Hinblick auf Radienwerte (r_{B}(ϕ_{B})) und ggf. Höhenwerte (z_{B}(ϕ_{B})) vermessen wird und das Vorbearbeiten bzw. das Fertigbearbeiten des Randes (R) unter Berücksichtigung der gemessen Werte (r_{B}(ϕ_{B}), Z_{B}(ϕ_{B})) erfolgt.

12. Verfahren nach Anspruch 1, **dadurch gekennzeichnet, daß** ein Kombinationswerkzeug (10) verwendet wird, das einen Grundkörper (20) aufweist, an dem eine Mehrzahl von Fräserschneiden (26, 28; 66, 68; 70; 72; 74) vorgesehen ist, die bei einer Drehung des Kombinationswerkzeugs (10) um eine Werkzeugdrehachse (C) einen Flugkreis (38) definieren und mittels der die Linse (L) am Rand (R) insbesondere so vorbearbeitet wird, daß die Linse (L) in der Draufsicht gesehen eine Umfangskontur (U) erhält, die ggf. bis auf ein geringfügiges Übermaß der Umfangskontur einer Fassung für die Linse (L) entspricht, wobei am Grundkörper (20) auch mindestens ein Drehmeißel (36) vorgesehen ist, der in Richtung der Werkzeugdrehachse (C) bezüglich der Fräserschneiden (26, 28; 66, 68; 70; 72) axial versetzt angeordnet ist oder auf axialer Höhe der Fräserschneiden (74) mit einer gegenüber dem Flugkreis (38) der Fräserschneiden (74) radial nach innen versetzten Drehschneide in Umfangsrichtung des Kombinationswerkzeugs (10) zwischen den Fräserschneiden (74) angeordnet ist, und wobei der Drehmeißel (36) eine Schneidengeometrie aufweist, mittels der die Linse (L) am Rand (R) insbesondere so fertigbearbeitet wird, daß die Linse (L) am Rand (R) entsprechend ihrer an der Fassung vorgesehenen Befestigung im Querschnitt gesehen eine vorbestimmte Randgeometrie aufweist und/oder mit einer Schutzfase (F₁, F₂) am Übergang zu einer oder beiden optisch wirksamen Flächen (O₁, O₂) versehen und/oder poliert ist.

13. Verfahren nach Anspruch 12, **dadurch gekennzeichnet, daß** am Grundkörper (20) mehrere Drehmeißel (36) vorgesehen sind, die vorzugsweise gleichmäßig über den Umfang des Grundkörpers (20) verteilt sind.

14. Verfahren nach Anspruch 12 oder 13, **dadurch gekennzeichnet, daß** der Drehmeißel (36) lösbar am Grundkörper (20) befestigt ist.

15. Verfahren nach einem der Ansprüche 12 bis 14, **dadurch gekennzeichnet, daß** die Fräserschneiden (26, 28; 66, 68; 70) jeweils in einer Draufsicht mit Blickrichtung senkrecht zur Werkzeugdrehachse (C) gesehen bezüglich der Werkzeugdrehachse (C) geneigt verlaufen.

16. Verfahren nach Anspruch 15, **dadurch gekennzeichnet, daß** in Umfangsrichtung benachbarte Fräserschneiden (70) bezüglich der Werkzeugdrehachse (C) in entgegengesetzten Richtungen geneigt verlaufen und die entgegengesetzt geneigten Fräserschneiden (70) alternierend am Umfang des Grundkörpers (20) angeordnet sind.

17. Verfahren nach einem der Ansprüche 12 bis 16, **dadurch gekennzeichnet, daß** auf dem Rand (R) der Linse (L) eine Spitzfacette (S) ausgebildet wird, wofür die Fräserschneiden (26, 28; 66, 68) jeweils mit einer V-förmigen Aussparung (30) versehen sind, wobei die V-förmigen Aussparungen (30) der Fräserschneiden (26, 28; 66, 68) in Richtung der Werkzeugdrehachse (C) auf gleicher axialer Höhe angeordnet sind.

18. Verfahren nach einem der Ansprüche 12 bis 17, **dadurch gekennzeichnet, daß** am Rand (R) der Linse (L) eine Schutzfase (F₁, F₂) angelegt wird, wofür die Fräserschneiden (26, 28; 66, 68) wenigstens an einem Ende jeweils mit einer Abschrägung (32, 34) versehen sind, wobei die Abschrägungen (32, 34) der Fräserschneiden (26, 28; 66, 68) in Richtung der Werkzeugdrehachse (C) auf gleicher axialer Höhe angeordnet sind.

19. Vorrichtung zur Randbearbeitung einer optischen Linse (L), namentlich einer Brillenlinse aus Kunststoff, insbesondere für die Durchführung des Verfahrens nach einem der Ansprüche 1 bis 18 unter Verwendung eines Kombinationswerkzeugs (10), mit zwei fluchtenden, um eine Werkstückdrehachse (B) im Drehwinkel (ϕ_{B}) geregelt drehbaren Haltewellen (14, 16), zwischen denen die Linse (L) einspannbar ist, und einer Werkzeugspindel (12), mittels der das Kombinationswerkzeug (10) um eine Werkzeugdrehachse (C) drehend antreibbar ist, die zu der Werkstückdrehachse (B) im wesentlichen parallel verläuft, wobei die Haltewellen (14, 16) und die Werkzeugspindel (12) lagegeregelt in einer ersten Achsrichtung (X) aufeinander zu und ggf. in einer rechtwinklig zur ersten Achsrichtung (X) verlaufenden zweiten Achsrichtung (Z) parallel zueinander bewegbar sind, **dadurch gekennzeichnet, daß** für eine Drehbearbeitung des zu bearbeitenden Randes (R) der Linse (L) das Kombinationswerkzeug (10) mittels der Werkzeugspindel (12) im Drehwinkel (ϕ_{C}) geregelt um die Werkzeugdrehachse (C) verschwenkbar ist, so daß ein am Kombinationswerkzeug (10) vorgesehener Drehmeißel (36) mit dem zu bearbeitenden Rand (R) in einen definierten Drehbearbeitungseingriff bringbar ist.

## Claims

1. Method for the edge-machining of an optical lens (L), namely a plastic spectacle lens rotatable with a controlled angle of rotation (ϕ_{B}) about a rotational axis (B) of a workpiece with the following steps:
preliminary machining of the edge (R) of the lens (L) by means of a combination tool (10) adjustable relative to the rotational axis (B) of the workpiece at least radially and rotatable about a rotational axis (C) of the tool whereby, seen in plan view, the lens (L) is given a circumferential contour (U) that corresponds to a circumferential contour of a holder for the lens (L) apart from a slight degree of oversizing if necessary and
finish-machining of the edge (R) of the lens (L) by means of the combination tool (10) whereby the edge (R) of the lens (L) is provided, when viewed in cross section, with a prespecified edge geometry corresponding to its intended means of fastening to the holder, optionally with a protective chamfer (F₁, F₂) at the transition to one or both optically effective surfaces (O₁, O₂) and optionally polished;
**characterized in that** the preliminary machining of the edge (R) and the finish-machining of the edge (R) is performed by means of a combination tool (10) comprising both milling cutters (26, 28; 66, 68; 70; 72; 74) and at least one lathe tool (36) with said combination tool being rotated at a controlled rotational speed (n_{c}) about the rotational axis (C) of the tool during a milling machining of the edge (R), and being swiveled with a controlled angle of rotation (ϕ_{C}) about the rotational axis (C) of the tool before and optionally also during a lathe machining of the edge (R).

2. Method according to claim 1, **characterized in that**, before a lathe machining of the edge (R) of the lens (L), the combination tool (10) is swiveled with a controlled angle of rotation (ϕ_{C}) about the rotational axis (C) of the tool in such a way that the lathe tool (36) optionally with radial adjustment of the combination tool (10) relative to the rotational axis (B) of the workpiece, is subsequently brought into contact with the edge (R) in a prespecified relative position between the lathe tool (36) and edge (R) at which the rake face (60) of the lathe tool (36) forms a prespecified angle with a tangent (T) applied to the edge (R) at the respective point of contact with the lathe tool (36).

3. Method according to claim 2, **characterized in that** the combination tool (10) suitably radially adjusted relative to the rotational axis (B) of the workpiece during a lathe machining of the edge (R) of a rotating lens (L) which is to be given a circumferential contour (U) deviating from the circular, is swiveled or tracked about the rotational axis (C) of the tool in dependence on the angle of rotation (ϕ_{B}) and on the radius (r_{B}(ϕ_{B})) to be created of the lens (L) with a controlled angle of rotation (ϕ_{C} = f [ϕ_{B}, r_{B}(ϕ_{B})]) in such a way that the prespecified angle between the rake face (60) of the lathe tool (36) and the tangent (T) at the respective point of contact between the lathe tool (36) and edge (R) substantially remains constant.

4. Method according to any one of the preceding claims, **characterized in that** the preliminary machining of the edge (R) of the lens (L) is performed by means of the milling cutters (26, 28; 66, 68; 70; 72; 74) of the combination tool (10) (Fig. 7).

5. Method according to any one of the preceding claims, **characterized in that** during the finish-machining of the edge (R) of the lens (L), a bevel edge (S) with two flanks (K₁, K₂) is created by means of the milling cutters (26, 28; 66, 68) of the combination tool (10) (Figs. 9, 10) which have terminal chamfers (32, 34) provided therefor whereby first one flank (K₂) of the bevel edge (S) is formed by the chamfers (32) at one end of the milling cutters and then the other flank (K₁) of the bevel edge (S) is formed by the chamfers (34) at the opposite end of the milling cutters.

6. Method according to any one of claims 1 to 4, **characterized in that** during the finish-machining of the edge (R) of the lens (L), a bevel edge (S) with two flanks (K₁, K₂) is created on the edge (R) by means of a lathe tool (36) of the combination tool (10) (Fig. 14) for which its lathe cutter has a V-shaped recess (50).

7. Method according to any one of claims 1 to 4, **characterized in that** during the finish-machining of the edge (R) of the lens (L) a bevel edge (S) with two flanks (K₁, K₂) is created on the edge (R) by means of a lathe tool (36) of the combination tool (10) (Figs. 15, 16) for which its lathe cutter has a chamfer (52, 54) at each end whereby first one flank (K₂) of the bevel edge (S) is formed by the chamfer (52) at one end of the lathe cutter and then the other flank (K₁) of the bevel edge (S) is formed by the chamfer (54) at the opposite end of the lathe cutter.

8. Method according to any one of claims 1 to 4, **characterized in that** during the finish-machining of the edge (R) of the lens (L) a groove (N) is formed on the edge (R) by means of a lathe tool (36) of the combination tool (10) (Fig. 19) whose lathe cutter has a width (b) less than or equal to the width of the groove (N) to be created.

9. Method according to any one of the preceding claims, **characterized in that** during the finish-machining of the edge (R) of the lens (L) a protective chamfer (F₁, F₂) is created on the edge (R) at the transition to at least one of the two optically effective surfaces (O₁, O₂) by means of a lathe tool (36) of the combination tool (10) whose lathe cutter has a chamfer (52, 54) at least at one end or has two adjacent straight cutting areas (56, 58) (Figs. 17, 18) forming a prespecified angle with each other.

10. Method according to any one of the preceding claims, **characterized in that** during the finish-machining of the edge (R) of the lens (L), which is comprised of a relatively soft plastic such as polycarbonate, at least one part of the edge (R) is polished by means of a lathe tool (36) with a negative rake angle (γ) (Fig. 6) and/or whose area (62) of the free surface (64) adjoining the rake face (60) has a clearance angle (α) equal to zero or approximately zero (Figs. 5, 6).

11. Method according to any one of the preceding claims, **characterized in that** the edge (R) of the lens (L) is measured before the preliminary machining of the edge (R) and/or between the preliminary machining and the finish-machining of the edge (R) with regard to radius values (r_{B}(ϕ_{B})) and optionally height values (z_{B}((ϕ_{B})) and the preliminary machining or finish-machining of the edge (R) is performed taking into account the measured values (r_{B}(ϕ_{B}), (z_{B}(ϕ_{B})).

12. Method according to claim 1, **characterized in that** a combination tool (10) is used that has a base body (20) on which a plurality of milling cutters (26, 28; 66, 68; 70; 72; 74) is provided which, when the combination tool (10) is rotated about a rotational axis (C) of the tool, define a cutting circle (38) and by means of which the edge (R) of the lens (L) is in particular preliminarily machined in such a way that, seen in plan view, the lens (L) is provided with a circumferential contour (U) which corresponds to a circumferential contour of a holder for the lens (L) apart from a slight degree of oversizing if necessary, whereby on the base body (20) also at least one lathe tool (36) is provided which, in the direction of the rotational axis (C) of the tool, is arranged axially displaced relative to the milling cutters (26, 28; 66, 68; 70; 72), or is arranged at the axial height of the milling cutters (74) in the circumferential direction of the combination tool (10) between the milling cutters (74) with a lathe cutter radially internally offset relative to the cutting circle (38) of the milling cutters (74), and whereby the lathe tool (36) has a cutter geometry by means of which the lens (L) on the edge (R) is in particular finish-machined in such a way that viewed in section, according to the intended method of securing it to the holder, the lens (L) on the edge (R) has a prespecified edge geometry and/or is provided with a protective chamfer (F₁, F₂) at the transition to one or both optically effective surfaces (O₁, O₂) and/or is polished.

13. Method according to claim 12, **characterized in that** provided on the base body (20) are several lathe tools (36) which are preferably uniformly distributed over the circumference of the base body (20).

14. Method according to claim 12 or 13, **characterized in that** the lathe tool (36) is secured detachably to the base body (20).

15. Method according to any one of claims 12 to 14, **characterized in that** the milling cutters (26, 28; 66, 68; 70) seen in plan view looking in a direction perpendicular to the rotational axis (C) of the tool are each inclined relative to the rotational axis (C) of the tool.

16. Method according to claim 15, **characterized in that** in the circumferential direction adjacent milling cutters (70) run in opposite directions inclined relative to the rotational axis (C) of the tool and the opposed inclined milling cutters (70) are arranged alternately on the circumference of the base body (20).

17. Method according to any one of claims 12 to 16, **characterized in that** a bevel edge (S) is formed on the edge (R) of the lens (L) for which the milling cutters (26, 28; 66, 68) are each provided with a V-shaped recess (30) whereby the V-shaped recesses (30) of the milling cutters (26, 28; 66, 68) are arranged at the same axial height in the direction of the rotational axis (C) of the tool.

18. Method according to any one of claims 12 to 17, **characterized in that** on the edge (R) of the lens (L) a protective chamfer (F₁, F₂) is created for which the milling cutters (26, 28; 66, 68) are provided at least at one end with a chamfer (32, 34) whereby the chamfers (32, 34) of the milling cutters (26, 28; 66, 68) are arranged at the same axial height in the direction of the rotational axis (C) of the tool.

19. Device for the edge-machining of an optical lens (L) namely a plastic spectacle lens in particular for the performance of the method according to any one of claims 1 to 18 using a combination tool (10), comprising two aligned holding shafts (14, 16) rotatable with a controlled angle of rotation (ϕ_{B}) about a rotational axis (B) of the workpiece between which the lens (L) can be clamped, and a tool spindle (12) by means of which the combination tool (10) can be driven rotatably about a rotational axis (C) of the tool running substantially parallel to the rotational axis (B) of the workpiece whereby the holding shafts (14, 16) and the tool spindle (12) can be moved with position control towards each other in a first axial direction (X) and optionally parallel to each other in a second axial direction (Z) perpendicular to the first axial direction (X), **characterized in that** for a lathe machining of the edge (R) to be machined of the lens (L), the combination tool (10) can be swiveled with a controlled angle of rotation (ϕ_{C}) by means of the tool spindle (12) about the rotational axis (C) of the tool so that a lathe tool (36) provided on the combination tool (10) can be brought into a defined lathe machining engagement with the edge (R) to be machined.

## Revendications

1. Procédé pour usiner le bord d'une lentille optique ou ophtalmique (L), à savoir un verre de lunettes en matériau synthétique, que l'on peut faire tourner autour d'un axe de rotation de pièce d'oeuvre (B) de manière régulée en angle de rotation (ϕ_{B}), le procédé présentant les étapes suivantes :
usinage d'ébauche du bord (R) de la lentille (L) au moyen d'un outil combiné (10) rotatif, qui peut être avancé au moins radialement par rapport à l'axe de rotation de pièce d'oeuvre (B) et peut tourner autour d'un axe de rotation d'outil (C), la lentille (L) recevant, en vue en plan, un contour périphérique (U) qui correspond, le cas échéant exception faite d'une légère surépaisseur, au contour périphérique d'une monture pour la lentille (L), et
usinage de finition du bord (R) de la lentille (L) au moyen de l'outil combiné (10), selon lequel la lentille (L) reçoit au niveau du bord (R), conformément à sa fixation à la monture, et vu en section transversale, une géométrie de bord prédéterminée, est pourvue, le cas échéant, d'un chanfrein de protection (F₁, F₂) au niveau de la transition vers l'une ou les deux surfaces actives optiques (O₁, O₂), et est, le cas échéant, polie,
**caractérisé en ce que** l'usinage d'ébauche du bord (R) et l'usinage de finition du bord (R) est effectué au moyen d'un outil combiné (10) qui présente aussi bien des tranchants de coupe de fraisage (26, 28 ; 66, 68 ; 70 ; 72 ; 74) qu'au moins un outil de coupe de tournage (36), et que l'on fait tourner autour de l'axe de rotation d'outil (C) en étant régulé en vitesse de rotation (n_{c}) pendant un usinage de fraisage du bord (R), et que l'on fait pivoter autour de l'axe de rotation d'outil (C) en étant régulé en angle de rotation (ϕ_{C}) avant et, le cas échéant, également pendant un usinage de tournage du bord (R).

2. Procédé selon la revendication 1, **caractérisé en ce qu'**avant un usinage de tournage du bord (R) de la lentille (L), on fait pivoter l'outil combiné (10) de manière régulée en angle de rotation (ϕ_{C}) autour de l'axe de rotation d'outil (C) de façon telle que l'outil de coupe de tournage (36) vienne en conséquence, le cas échéant avec avance radiale de l'outil combiné (10)) par rapport à l'axe de rotation de pièce d'oeuvre (B), en contact avec le bord (R) dans une position relative prédéterminée entre l'outil de coupe de tournage (36) et le bord (R), pour laquelle la face de coupe (60) de l'outil de coupe de tournage (36) forme un angle prédéterminé avec une tangente (T) appliquée au bord (R) au niveau du point de contact considéré avec l'outil de coupe de tournage (36).

3. Procédé selon la revendication 2, **caractérisé en ce que** pendant un usinage de tournage du bord (R) d'une lentille (L) en rotation, dont le contour périphérique (U) à engendrer s'écarte d'une forme circulaire, on fait pivoter ou suivre l'outil combiné (10) avancé de manière radiale appropriée par rapport à l'axe de rotation de pièce d'oeuvre (B), autour de l'axe de rotation d'outil (C), en fonction de l'angle de rotation (ϕ_{B}) et en fonction du rayon (r_{B}(ϕ_{B})) à engendrer sur la lentille (L), ceci de manière régulée en angle de rotation (ϕ_{C} = f[ϕ_{B}, r_{B}(ϕ_{B})], de façon à ce que l'angle prédéterminé entre la face de coupe (60) de l'outil de coupe de tournage (36) et la tangente (T) au niveau de la zone de contact considérée entre l'outil de coupe de tournage (36) et le bord (R), reste sensiblement constant.

4. Procédé selon l'une des revendications précédentes, **caractérisé en ce que** l'usinage d'ébauche du bord (R) de la lentille (L) est effectué au moyen des tranchants de coupe de fraisage (26, 28 ; 66, 68 ; 70 ; 72 ; 74) de l'outil combiné (10) (figure 7).

5. Procédé selon l'une des revendications précédentes, **caractérisé en ce que** lors de l'usinage de finition du bord (R) de la lentille (L), on engendre sur le bord (R) une facette en pointe (S) à deux flancs (K₁, K₂), au moyen des tranchants de coupe de fraisage (26, 28 ; 66, 68) de l'outil combiné (10) (figures 9, 10), qui présentent à cet effet aux extrémités des biseaux (32, 34), procédé selon lequel on réalise tout d'abord l'un des flancs (K₂) de la facette en pointe (S) par les biseaux (32) à une extrémité des tranchants de coupe de fraisage, et ensuite l'autre flanc (K₁) de la facette en pointe (S) par les biseaux (34) à l'extrémité opposée des tranchants de coupe de fraisage.

6. Procédé selon l'une des revendications 1 à 4, **caractérisé en ce que** lors de l'usinage de finition du bord (R) de la lentille (L), on engendre sur le bord (R) une facette en pointe (S) à deux flancs (K₁, K₂), au moyen d'un outil de coupe de tournage (36) de l'outil combiné (10) (figure 14), dont l'arête de coupe de tournage présente à cet effet un évidement (50) en forme de V.

7. Procédé selon l'une des revendications 1 à 4, **caractérisé en ce que** lors de l'usinage de finition du bord (R) de la lentille (L), on engendre sur le bord (R) une facette en pointe (S) à deux flancs (K₁, K₂), au moyen d'un outil de coupe de tournage (36) de l'outil combiné (10) (figures 15, 16), dont l'arête de coupe de tournage présente à cet effet à chacune des deux extrémités, un biseau (52, 54), procédé selon lequel on réalise tout d'abord l'un des flancs (K₂) de la facette en pointe (S) par le biseau (52) à une extrémité de l'arête de coupe de tournage, et ensuite l'autre flanc (K₁) de la facette en pointe (S) par le biseau (54) à l'autre extrémité de l'arête de coupe de tournage.

8. Procédé selon l'une des revendications 1 à 4, **caractérisé en ce que** lors de l'usinage de finition du bord (R) de la lentille (L), on engendre sur le bord (R) une rainure (N) au moyen d'un outil de coupe de tournage (36) de l'outil combiné (10) (figure 19), dont l'arête de coupe de tournage présente une largeur (b) qui est inférieure ou égale à la largeur de la rainure (N) à réaliser.

9. Procédé selon l'une des revendications précédentes, **caractérisé en ce que** lors de l'usinage de finition du bord (R) de la lentille (L), on engendre sur le bord (R), au niveau de la transition à au moins l'une des deux faces actives optiques (O₁, O₂), un chanfrein de protection (F₁, F₂) au moyen d'un outil de coupe de tournage (36) de l'outil combiné (10), dont l'arête de coupe de tournage possède à au moins une extrémité, un biseau (52, 54), ou présente deux zones d'arête de coupe rectilignes voisines (56, 58) (figures 17, 18), qui forment entre elles un angle prédéterminé.

10. Procédé selon l'une des revendications précédentes, **caractérisé en ce que** lors de l'usinage de finition du bord (R) d'une lentille (L), qui est réalisée en un matériau synthétique relativement mou comme du polycarbonate, au moins une partie du bord (R) est polie à l'aide d'un outil de coupe de tournage (36) dont l'angle de coupe (γ) est négatif (figure 6) et/ou dont la zone (62) de la face de dépouille (64), qui se raccorde directement à la face de coupe (60), présente un angle de dépouille (α) égal à zéro ou approximativement égal à zéro (figures 5, 6).

11. Procédé selon l'une des revendications précédentes, **caractérisé en ce qu'**avant l'usinage d'ébauche du bord (R) et/ou entre l'usinage d'ébauche et l'usinage de finition du bord (R), on procède à la mesure du bord (R) de la lentille (L) en ce qui concerne des valeurs de rayon (r_{B}(ϕ_{B})) et, le cas échéant, des valeurs d'épaisseur (z_{B}(ϕ_{B})), et l'usinage d'ébauche ou respectivement l'usinage de finition du bord (R) s'effectue en tenant compte des valeurs mesurées (r_{B}(ϕ_{B}), z_{B}(ϕ_{B})).

12. Procédé selon la revendication 1, **caractérisé en ce qu'**on utilise un outil combiné (10) qui comprend un corps de base (20) sur lequel sont prévus une pluralité de tranchants de coupe de fraisage (26, 28 ; 66, 68 ; 70 ; 72 ; 74) qui, lors d'une rotation de l'outil combiné (10) autour d'un axe de rotation d'outil (C), définissent un cercle de révolution (38), et au moyen desquels la lentille (L) est ébauchée sur le bord (R) notamment de façon à ce que la lentille (L) reçoive, en vue en plan, un contour périphérique (U) qui correspond, le cas échéant exception faite d'une légère surépaisseur d'usinage, au contour périphérique d'une monture pour la lentille (L), procédé selon lequel sur le corps de base (20) est prévu également au moins un outil de coupe de tournage (36) qui est agencé de manière axialement décalée par rapport aux tranchants de coupe de fraisage (26, 28 ; 66, 68 ; 70 ; 72) dans la direction de l'axe de rotation d'outil (C), ou bien qui est agencé à la hauteur axiale des tranchants de coupe de fraisage (74), avec une arête de coupe de tournage décalée radialement vers l'intérieur par rapport au cercle de révolution (38) des tranchants de coupe de fraisage (74), entre les tranchants de coupe de fraisage (74) en se référant à la direction périphérique de l'outil combiné (10), et selon lequel l'outil de coupe de tournage (36) présente une géométrique d'arête de coupe au moyen de laquelle la lentille (L) est soumise notamment à un usinage de finition tel, que la lentille (L) présente au niveau du bord (R), conformément à sa fixation à la monture, et vu en section transversale, une géométrie prédéterminée de son bord, et/ou soit pourvue d'un chanfrein de protection (F₁, F₂) au niveau de la transition vers l'une ou les deux surfaces actives optiques (O₁, O₂), et/ou est polie.

13. Procédé selon la revendication 12, **caractérisé en ce que** sur le corps de base (20) sont prévus plusieurs outils de coupe de tournage (36) qui sont répartis de préférence régulièrement le long de la périphérie du corps de base (20).

14. Procédé selon la revendication 12 ou 13, **caractérisé en ce que** l'outil de coupe de tournage (36) est fixé de manière amovible sur le corps de base (20).

15. Procédé selon l'une des revendications 12 à 14, **caractérisé en ce que** les tranchants de coupe de fraisage (26, 28 ; 66, 68 ; 70) s'étendent chacun dans une vue en plan avec une direction d'observation perpendiculaire à l'axe de rotation d'outil (C), de manière inclinée par rapport à l'axe de rotation d'outil (C).

16. Procédé selon la revendication 15, **caractérisé en ce que** des tranchants de coupe de fraisage (70) voisins dans la direction périphérique s'étendent en étant inclinés dans des directions opposées par rapport à l'axe de rotation d'outil (C), et les tranchants de coupe de fraisage (70) inclinés de manière opposée sont agencés de façon alternée à la périphérie du corps de base (20).

17. Procédé selon l'une des revendications 12 à 16, **caractérisé en ce que** sur le bord (R) de la lentille (L) est réalisée une facette en pointe (S), ce pour quoi les tranchants de coupe de fraisage (26, 28 ; 66, 68) sont pourvus chacun d'un évidement (30) en forme de V, les évidements (30) en forme de V des tranchants de coupe de fraisage (26, 28 ; 66, 68) étant agencés sur une même hauteur axiale dans la direction de l'axe de rotation d'outil (C).

18. Procédé selon l'une des revendications 12 à 17, **caractérisé en ce que** sur le bord (R) de la lentille (L) est appliqué un chanfrein de protection (F1, F2), ce pour quoi les tranchants de coupe de fraisage (26, 28 ; 66, 68) sont pourvus chacun, au moins à une extrémité, d'un biseau (32, 34), les biseaux (32, 34) étant agencés sur une même hauteur axiale dans la direction de l'axe de rotation d'outil (C).

19. Dispositif pour l'usinage du bord d'une lentille optique ou ophtalmique (L), à savoir un verre de lunette en matériau synthétique, en particulier pour la mise en oeuvre du procédé selon l'une des revendications 1 à 18 en utilisant un outil combiné (10), le dispositif comprenant deux arbres de support (14, 16) alignés et pouvant tourner autour d'un axe de rotation de pièce d'oeuvre (B) de manière régulée en angle de rotation (ϕ_{B}), et entre lesquels peut être serrée la lentille (L), ainsi qu'une broche porte-outil (12) au moyen de laquelle l'outil combiné (10) peut être entraîné en rotation autour d'un axe de rotation d'outil (C) qui s'étend sensiblement de manière parallèle à l'axe de rotation de pièce d'oeuvre (B), les arbres de support (14, 16) et la broche porte-outil (12) pouvant être déplacés de façon régulée en position dans une première direction d'axe (X) les uns vers les autres et, le cas échéant, dans une deuxième direction d'axe (Z) s'étendant perpendiculairement à la première direction d'axe (X), parallèlement les uns aux autres, **caractérisé en ce que** pour un usinage de tournage du bord (R) à usiner de la lentille (L), l'outil combiné (10) peut pivoter autour de l'axe de rotation d'outil (C) au moyen de la broche porte-outil (12) et de manière régulée en angle de rotation (ϕ_{C}), de sorte qu'il est possible d'amener un outil de coupe de tournage (36) prévu sur l'outil combiné (10) en prise définie d'usinage de tournage avec le bord (R) à usiner.
